**Europäisches Patentamt**

**European Patent Office**

**Office européen des brevets**

(19)

(11) Veröffentlichungsnummer : **0 391 058 B1**

(12)

# EUROPÄISCHE PATENTSCHRIFT

(45) Veröffentlichungstag der Patentschrift :
**19.08.92 Patentblatt 92/34**

(51) Int. Cl.$^5$ : **G01D 5/34**

(21) Anmeldenummer : **90103496.7**

(22) Anmeldetag : **23.02.90**

(54) **Positionsmessvorrichtung für Kran- und Elektrohängebahnen.**

(30) Priorität : **04.04.89 DE 3910873**

(43) Veröffentlichungstag der Anmeldung :
**10.10.90 Patentblatt 90/41**

(45) Bekanntmachung des Hinweises auf die
Patenterteilung :
**19.08.92 Patentblatt 92/34**

(84) Benannte Vertragsstaaten :
**AT BE CH DE DK ES FR GB GR IT LI LU NL SE**

(56) Entgegenhaltungen :
**WO-A-84/01027**
**GB-A- 1 284 641**

(73) Patentinhaber : **R. Stahl Fördertechnik GmbH**
**Daimlerstrasse 6**
**W-7118 Künzelsau (DE)**

(72) Erfinder : **Lanfer, Hermann, Dr.**
**Ernst-Schmid-Strasse 18**
**W-7118 Künzelsau (DE)**
Erfinder : **Kugler, Dieter**
**Hohe Strasse 5**
**W-7110 Öhringen-Cappel (DE)**
Erfinder : **Rieger, Dieter**
**Kanalweg 6**
**W-7119 Sindringen (DE)**

(74) Vertreter : **Rüger, Rudolf, Dr.-Ing. et al**
**Patentanwälte Dr.-Ing. R. Rüger Dipl.-Ing. H.P.**
**Barthelt Webergasse 3 Postfach 348**
**W-7300 Esslingen/Neckar (DE)**

EP 0 391 058 B1

## Beschreibung

Die Erfindung betrifft eine Positionsmeßvorrichtung für Kran- und Elektrohängebahnen gemäß den Merkmalen des Oberbegriffes des Anspruches 1.

Aus der EP-PS O 116 636 ist eine gattungsgemäße Positionsmeßvorrichtung für das Bestimmen der relativen Position zweier gegeneinander bewegbarer Teile bekannt. An dem einen Teil ist eine lückenlose Folge von gleich langen binären Codemarken vorgesehen. Jeweils n aufeinanderfolgende Codemarken bilden ein n-stelliges binäres Codewort. Jedes so zu bildende Codewort kommt nur einmal vor. Eine derartige Folge von Codemarken kann mit Hilfe eines rückgekoppelten Schieberegisters als binäre Pseudozufallsfolge gebildet werden.

An dem anderen Teil ist eine Codelesevorrichtung vorgesehen, die mindestens n aufeinanderfolgende Marken erfassen kann. Für jede Codemarke ist dazu eine Mehrzahl von Sensoren vorhanden.

Bei dieser bekannten Positionsmeßvorrichtung definiert ein Codewort eine bestimmte relative Position der beiden Teile zueinander. Die in Bewegungsrichtung gemessene Länge der Codemarken und die Anzahl der maximal möglichen Codeworte legen die maximale Länge der Strekke fest, die mit Codeworten maximal adressierbar ist.

Die Genauigkeit, mit der die Position gemessen werden kann, also das Auflösungsvermögen, hängt von der Länge der Codemarken ab, wenn keine weiteren Maßnahmen getroffen werden. Im Interesse einer genauen Positionierung muß deswegen diese Länge so klein wie möglich gewählt werden.

Soll die bekannte Positionsmeßvorrichtung für Kran- oder Elektrohängebahnen verwendet werden, so ist die gesamte Fahrstrecke zu adressieren. Dadurch gelangt man zu Codeworten mit vielen Stellen. Die maximale Fahrwegstrecke ist im wesentlichen durch die Summe der Längen aller in der Pseudozufallsfolge auftretenden Codemarken begrenzt, selbst dann, wenn es viele Streckenabschnitte gibt, in denen die genaue Position des jeweiligen Fahrzeuges nicht bekannt sein muß.

Will man die Wegstrecke vergrößern, so muß man entweder die Stellenzahl n der Codeworte erhöhen oder die Länge der Codemarken vergrößern. Ersteres erhöht den apparativen Aufwand zum Lesen der Codeworte bzw. erfordert ein Bildungspolynom höherer Ordnung für die Codemarkenfolge und letzteres reduziert das Auflösungsvermögen.

Aufgabe der Erfindung ist es deshalb, eine Positionsmeßvorrichtung zu schaffen, die es ermoglicht, ohne das Auflösungsvermögen bei der Positionserkennung zu reduzieren oder ein Polynom höherer Ordnung anzuwenden, eine längere Fahrstrecke vorsehen zu können als es der Summe der Längen aller in der Pseudozufallsfolge auftretenden Codemarken entspricht.

Diese Aufgabe wird erfindungsgemäß durch die Vorrichtung mit den Merkmalen des Anspruches 1 gelöst.

Bei der neuen Positionsmeßvorrichtung sind aufeinanderfolgende Codemarken zu Blöcken zusammengefaßt, denen eine Blockkennung zugeordnet ist. Dadurch ist es möglich, Lücken zwischen den Blöcken vorzusehen, in denen nicht adressiert werden muß.

Die Fahrstrecke kann deshalb in interessierende Bereiche, in denen die genaue Position der Fahrzeuge bekannt sein muß, und in Zwischenbereiche aufgeteilt werden, die die interessierenden Streckenabschnitte miteinander verbinden. In den interessierenden Bereichen sind Blöcke vorgesehen, während die Zwischenbereiche Lücken darstellen.

Für die Anordnung der Codeträger, die die zu Blöcken zusammengefaßten Codemarken tragen, und der Codelesevorrichtungen, die der Erfassung der Codeworte dienen, sind grundsätzlich zwei Ausführungsformen denkbar:

In der ersten Ausführungsform sind die Blöcke in den interessierenden Bereichen der Fahrstrecke an ortsfesten Codeträgern vorgesehen und die Codelesevorrichtungen sind an den Fahrzeugen angebracht. Dadurch wird auf einfache Weise die Länge der zur Verfügung stehenden Wegstrecke vergrößert. Die Zahl der Codelesevorrichtungen und damit die Zahl der Fahrzeuge kann auch nachträglich jederzeit verändert werden.

In der zweiten Ausführungsform sind die Codelesevorrichtungen ortsfest in den interessierenden Bereichen angebracht und die Codeträger mit den Blöcken befinden sich an den Fahrzeugen. Hier ist es jederzeit möglich, zusätzliche Codelesevorrichtungen vorzusehen und damit die Zahl der Bereiche zu vergrößern, in denen die Position der Fahrzeuge genau bekannt sein muß. Durch eine eindeutige Zuordnung der Blöcke zu den Fahrzeugen kann darüber hinaus eine einfache Fahrzeugkennung erreicht werden.

Eine Kombination der beiden Ausführungsformen ist ebenfalls denkbar.

Innerhalb eines Blockes sind die Codemarken in der einzigen Spur nebeneinander in der Reihenfolge angeordnet, in der sie bei der Iteration mit dem erzeugenden Polynom gebildet werden. Die Blöcke sind entlang der Fahrrichtung so nebeneinander angeordnet, daß das letzte Codewort eines Blockes bei der Iteration mit dem erzeugenden Polynom vor dem ersten Codewort des nachfolgenden Blockes gebildet wird.

Diese Anordnung der Codeworte und Blöcke ermöglicht eine einfache Bestimmung der aktuellen Fahrzeugposition, ohne daß das Fahrzeug dazu vorher bewegt werden muß.

Um die Lücken von den Blöcken unterscheiden zu können, gibt es mehrere Möglichkeiten. Den Blöcken kann eine Parallelspur zugeordnet werden, die von einem Sensor der Hilfslesevorrichtung abgefragt wird. In den Fällen, in denen es nicht möglich ist, an dem Codeträger eine Parallelspur anzubringen, wird die Blockkennung in der Spur des Blockes vorgesehen.

Liegt die Blockkennung in der Spur des Blockes, können die Codelesevorrichtung und die Hilfslesevorrichtung nach dem gleichen physikalischen Prinzip oder nach unterschiedlichen physikalischen Prinzipien arbeiten. Wenn die Code- und die Hilfslesevorrichtung nach unterschiedlichen physikalischen Prinzipien arbeiten, erstreckt sich die Blockkennung einheitlich über den ganzen Block.

Arbeiten die Lesevorrichtungen nach dem gleichen physikalischen Prinzip, müssen sich die Signale der Hilfslesevorrichtung von den Signalen der Codelesevorrichtung unterscheiden lassen. Diese Unterscheidbarkeit kann entweder im Signalpegel oder im Signalmuster liegen.

Wird die Blockkennung, wie oben erwähnt, durch eine Parallelspur gebildet, wird in einem Sensor der Hilfslesevorrichtung nur dann ein bestimmtes Signal oder ein bestimmtes Signalmuster hervorgerufen, wenn die Signale der Codelesevorrichtung ein zulässiges Codewort aus einem Block repräsentieren.

Wenn es geometrisch und mechanisch möglich ist, eine Parallelspur vorzusehen und an der Codelesevorrichtung eine entsprechende Hilfslesevorrichtung anzubringen, ist diese Ausführungsform technisch sehr leicht zu realisieren. Der Sensor in der Hilfslesevorrichtung braucht lediglich in Form einer Ja-/Nein-Entscheidung erkennen, ob er über der Parallelspur steht oder nicht.

Der Sensor in der Hilfslesevorrichtung kann ein optischer Sensor, z.B. eine Lichtschranke sein. In einer einfachen Ausführungsform ist diese Lichtschranke eine Gabellichtschranke und die Parallelspur unterbricht den Lichtweg zwischen Sender und Empfänger dieser Gabellichtschranke immer dann, wenn die Codelesevorrichtung zulässige Codeworte liest.

Ist die Blockkennung in der Spur des Blocks, so ergibt sich, ähnlich wie bei der Parallelspur, eine technisch leicht zu realisierende Ausführungsform, wenn die Sensoren der Hilfslesevorrichtung nach einem anderen physikalischen Prinzip arbeiten als die Sensoren der Codelesevorrichtung. Die Blockkennung kann sich hierzu über den ganzen Block erstrecken. Die Signale der Hilfslesevorrichtung zeigen wie bei der Parallelspur an, wann die Codelesevorrichtung zulässige Codeworte aus einem Block liest.

Es ist hier z.B. möglich, den Codeträger für Lücken und Blöcke mit unterschiedlicher Permeabilität zu versehen und in der Hilfslesevorrichtung einen Sensor vorzusehen, der auf induktiver Basis arbeitet. Die Codelesevorrichtung kann z.B. optische Sensoren enthalten.

Vorteil dieser Ausführunsform ist die einfache apparative Gestaltung. Es ist nur ein kleiner Sensor in Richtung des Fahrweges neben der Codelesevorrichtung vorzusehen, der sich leicht gegen jede Art von Verschmutzung schützen läßt. Es ist lediglich zu berücksichtigen, daß die Blockkennung in Richtung des Fahrweges um die Länge des Sensorfeldes der Codelesevorrichtung kürzer ist als der Block selbst und zusätzlich um die Breite des Sensors der Hilfslesevorrichtung gegen den Block verschoben ist.

Arbeiten die Sensoren der beiden Lesevorrichtungen nach dem gleichen physikalischen Prinzip, enthalten die Lücken entweder keine Codemarken oder Codemarkenfolgen, die für die Blöcke nicht zugelassen sind. Derartige Codemarkenfolgen können aus identischen oder periodisch angeordneten Codemarken bestehen. Wenn die Codelesevorrichtung über einer Lücke steht, wird somit ein nicht zugelassenes Codewort gelesen, das die Auswerteeinheit als solches erkennt und ausschließt.

Die Blockkennung kann auch Mittel umfassen, die eine Signalpegelverschiebung bewirken. Diese Mittel können auf den Sensor zugeschnittene Abschwächer, z.B. in Form von Gittern sein. Die so in der Hilfslesevorrichtung erzeugten Signale zeigen durch ihre Pegelwerte eine Stellung der Codelesevorrichtung im Übergangsbereich an. Vorteil dieser Ausführungsform ist, daß an den Codemarken nicht eingegriffen werden muß. Gleichzeitig kann die Hilfslesevorrichtung durch Teile der Codelesevorrichtung gebildet sein, was einen weiteren Vorteil darstellt.

Eine andere Möglichkeit der Blockkennung besteht darin, ein Kennmarkenmuster vorzusehen, das ein kleineres Raster aufweist als das Codemarkenmuster. Das Kennmarkenmuster erzeugt beispielsweise auf der Länge einer Codemarke eine alternierende Folge von Wertigkeiten.

Um den Unterschied zwischen den beiden Mustern erkennen zu können, sind in der Codelesevorrichtung je Codemarke mehrere Sensoren vorgesehen. Das hat den Vorteil, daß die Hilfslesevorrichtung, wie vorher, durch Sensoren der Codelesevorrichtung gebildet werden kann.

In der Zeichnung sind Ausführungsbeispiele des Gegenstandes der Erfindung dargestellt. Es zeigen:

Fig. 1 eine Krananordnung mit einer Positionsmeßvorrichtung gemäß der Erfindung, in einer perspektivischen Darstellung,

Fig. 2 einen Ausschnitt aus der Laufschiene des Kranes nach Fig. 1, unter Veranschaulichung des Codeträgers sowie einer als Parallelspur ausgebildeten Blockkennung und die zugehörigen Lesevorrichtungen in jeweils stark schematisierter Darstellung,

Fig. 3 ein fünfstelliges rückgekoppeltes Schieberegister zur Erzeugung einer Pseudozufallsfolge, bei der innerhalb der Folge jede Zahl nur ein Mal vorkommt,

Fig. 4 die mit dem Schieberegister nach Fig. 3 nacheinander zu erzeugenden Codeworte mit der zugehörigen Codewortnummer,

Fig. 5 auf einem Codeträger hintereinander angeordnete Codemarken, wie sie z.B. der Ausgang Q4 des Schieberegisters nach Fig. 4 nacheinander erzeugt,

Fig. 6 ein in Blöcke und Lücken unterteilter verzweigter Fahrweg in stark schematisierter Darstellung,

Fig. 7 eine Darstellung entsprechend Fig. 2, wobei die Hilfslesevorrichtung erheblich kürzer ist als die Codelesevorrichtung,

Fig. 8 eine Darstellung entsprechend Fig. 2, bei der sich die Blockkennung in der Spur des Blockes befindet und die beiden Lesevorrichtungen nach unterschiedlichen physikalischen Prinzipien arbeiten,

Fig. 9 eine Darstellung entsprechend Fig. 8, wobei die Hilfslesevorrichtung und die Codelesevorrichtung nach dem gleichen physikalischen Prinzip arbeiten,

Fig. 10 den Verlauf des Signalpegels bei einer Positionsmeßvorrichtung entsprechend Fig. 9,

Fig. 11 und 12 eine Positionsmeßvorrichtung, bei der die Blockkennung in der Spur des Blockes durch ein Kennmarkenraster verwirklich ist, und

Fig. 13 eine Krananordnung mit einer Positionsmeßvorrichtung, in einer perspektivischen Darstellung, mit einer ortsfesten Codelesevorrichtung und an den Fahrzeugen angebrachten Codeträgern.

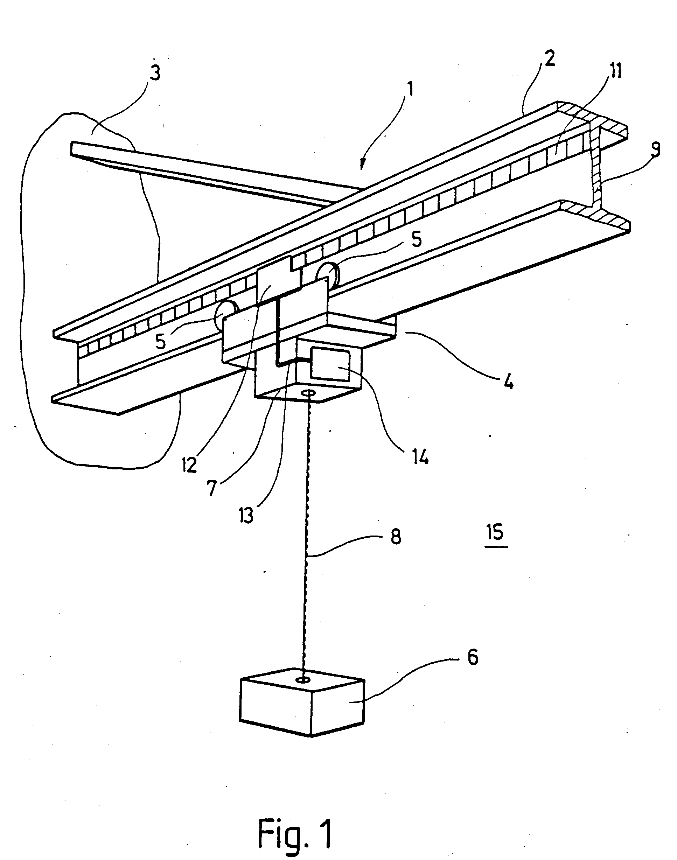

In Fig. 1 ist ein mit 1 bezeichneter Kran mit einem Ausleger veranschaulicht, der eine horizontal sich erstreckende Laufschiene 2 in Gestalt eines I-Profils aufweist, die einenends aus einer nicht näher veranschaulichten Wand 3 auskragt. Längs der Laufschiene 2 kann ein als Laufkatze 4 ausgebildetes Förderelement laufen, das in Längsrichtung der Laufschiene 2 mittels Laufrollen 5 längsverfahrbar ist, von denen wenigstens eine mittels einer nicht erkennbaren Antriebsvorrichtung antreibbar ist. Die Laufkatze 4 ist zum Anheben und Absenken von Lasten 6 mit einem üblichen Hebezeug 7 versehen, an dessen Zugmittel 8 die Last 6 anzuhängen ist.

An einem Steg 9 der I-förmigen Laufschiene 2 ist ein Codeträger 11 befestigt, der sich über die gesamte Länge der verkürzt dargestellten Laufschiene 2 erstreckt. Mit diesem Codeträger 11 wirkt eine Codelesevorrichtung 12 zusammen, die sich an der Laufkatze 4 befindet und somit an dem Codeträger 11 vorbeiläuft, wenn sich die Laufkatze 4 längs der Laufschiene 2 bewegt. Die Codelesevorrichtung 12 ist über eine Leitung 13 mit einer Auswerteeinheit 14 verbunden, die über Schleifkontakte und Stromschienen, die auf der gegenüberliegenden Seite des Steges 9 angebracht sind, die ermittelten Daten an eine zentrale Steuerschaltung 15 weiterleiten. Die Steuerschaltung 15 setzt entsprechend der erreichten Position die Antriebsvorrichtung der Laufkatze 4 still oder in Gang. Die Stromschienen für die Antriebseinrichtung befinden sich ebenfalls auf der Rückseite des Steges 9 und sind deswegen wiederum nicht erkennbar.

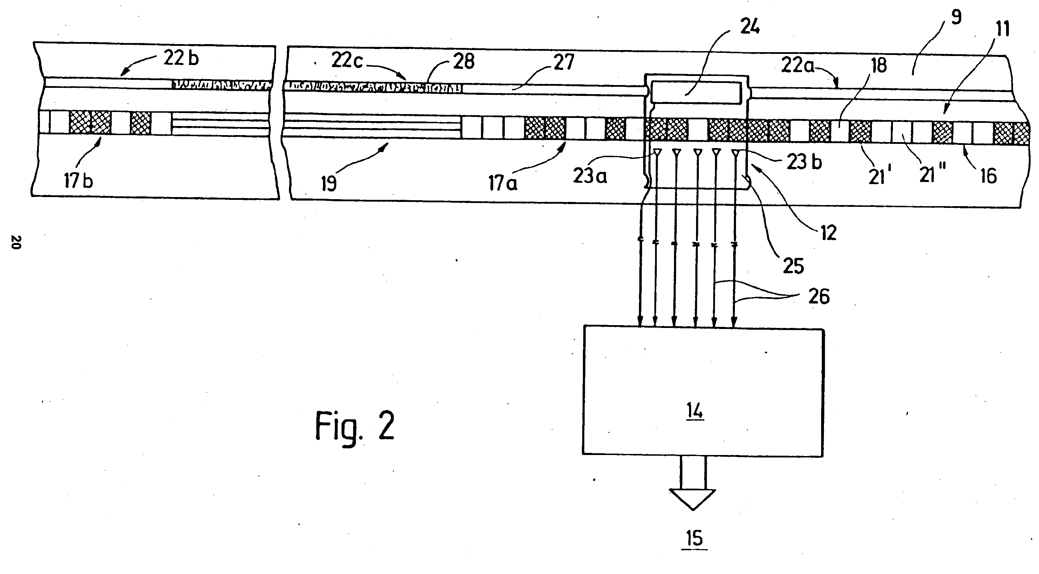

In Fig. 2 ist vergrößert und stark schematisiert ein Stück des Steges 9 im Ausschnitt dargestellt. Hiernach besteht der Codeträger 11 aus einer länglichen Leiste 16, die auf dem Steg 9 befestigt ist. Sie geht über die gesamte Länge der Laufschiene 2 durch und trägt in einer Spur zu Blöcken 17 zusammengefaßte Codemarken 18. Die Blöcke 17 sind durch eine Lücke 19 voneinander getrennt. In den Blöcken 17 sind gleich große rechteckige Felder 21 zu erkennen, die die einzelnen Codemarken 18 symbolisieren. Die Lücke 19 trägt keine Codemarken 18.

Auf dem Steg 9 ist eine Blockkennung 22 in Form einer Parallelspur zu der Leiste 16 angebracht. Die Blockkennung 22 ist unterteilt in zwei Bereiche 22a, 22b, die dieselbe Längserstreckung aufweisen wie die Blöcke 17a, 17b und in einen Bereich 22c, der dieselbe Längserstreckung aufweist wie die Lücke 19.

Abgetastet und gelesen wird der Codeträger 11 mittels der Codelesevorrichtung 12, die Lesestationen 23 trägt. Die Blockkennung 22 wird von einer Hilfslesevorrichtung 24 abgetastet, die sich über die gesamte Länge der Codelesevorrichtung 12 erstreckt.

Die Lesestationen 23 und die Hilfslesevorrichtung 24 sind auf einem gemeinsamen Rahmen 25 gehaltert, der mit der Laufkatze 4 verbunden ist und beim Fahren der Katze 4 parallel zu dem Codeträger 11 und der Blockkennung 22 längs mitbewegt wird. Jede der Lesestationen 23 - im gezeigten Ausführungsbeispiel sind dies fünf - und die Hilfslesevorrichtung 24 sind über Verbindungsleitungen 26 mit der Auswerteeinheit 14 verbunden, die ihre Daten an die zentrale Steuerung 15 meldet.

Bei dem gezeigten Codeträger 11 handelt es sich um einen sogenannten reflexiven Codeträger, der je nach Wertigkeit der Codemarke 17 mehr oder weniger Licht von einer nicht weiter dargestellten Beleuchtungseinrichtung zu den Lesestationen 23 der beiden Lesevorrichtungen 12, 24 reflektiert. In dem gezeigten Beispiel sind die Lesestationen 23 und die Hilfslesevorrichtung 24 als Reflexlichtschranken ausgeführt. Die Felder 21 sind, wie das Feld 21′, entweder absorbierend, oder, wie das Feld 21″, reflektierend, womit zwei unterschiedliche Werte "0" und "1" darstellbar sind. Beispielsweise ist dem absorbierenden Feld 21′ der Wert "0" und dem reflektierenden Feld 21″ der Wert "1" zugeordnet. Die Blockkennung 22a, 22b im Bereich der Blöcke 17a, 17b ist mit einem reflektierenden Feld 27 versehen. Hier kann beispielsweise der Wert "1" zugeordnet werden. Im Bereich der Lücke 19 ist die Blockkennung 22c mit einem absorbierenden Feld 28 versehen. Dem Feld 28 kann beispielsweise der Wert "0" zugeordnet sein.

Die Blöcke 17 enden bzw. beginnen an der gleichen Stelle wie die reflektierenden Felder 27 der Blockkennung 22. Die Hilfslesevorrichtung 24 zeigt nur dann eine "1" an, wenn sie in ihrer gesamten Länge über einem Feld 27 der Blockkennung 22 steht. Die Hilfslesevorrichtung 24 hat die gleiche Längserstreckung wie die Codelesevorrichtung 12. Der Anfang der Hilfslesevorrichtung 24 fällt mit der linken Lesestation 23a und das Ende der Hilfslesevorrichtung 24 mit der rechten Lesestation 23b zusammen. Das bedeutet, daß die Lesestationen 23 nur dann Codemarken 18 aus den Blocken 17 lesen, wenn die Hilfslesevorrichtung 24 eine "1" an die Auswerteeinheit 14 liefert. Wenn die Hilfslesevorrichtung 24 auch nur teilweise von dem Feld 28 liest, also zumindest einige Lesestationen 23 über der Lücke 19 stehen, liefert die Hilfslesevorrichtung 24 eine "0" an die Auswerteeinheit 14, die daraufhin der Steuerschaltung 15 meldet, daß die Codelesevorrichtung 12 keine gültigen Daten liefert.

Anstelle des reflexiven Codeträgers 11 kann auch ein transmissiver Codeträger eingesetzt werden, wobei sich dann die Beleuchtungseinrichtung und die Lesevorrichtungen 12, 24 auf verschiedenen Seiten des Codeträgers 11 befinden und das von dem Codeträgerdurchgelassene Licht ausgewertet wird. Die Lesestationen 23 können in diesem Fall Gabellichtschranken sein.

Jede Lesestation 23 in Fig. 2 symbolisiert drei Sensoren, die äquidistant angeordnet sind. In der Praxis kann nicht davon ausgegangen werden, daß sämtliche Lesestationen 23 exakt zu derselben Zeit, also synchron, den Lesezustand sprunghaft ändern, und nicht etwa eine Lesestation einer anderen geringfügig voreilt. Dadurch, daß für jede Codemarke drei Sensoren vorgesehen sind, werden mindestens zwei benachbarte Sensoren denselben Wert anzeigen, so daß sich aus den gelesenen Signalen die tatsächliche Codemarkenfolge ermitteln läßt. Genauere Angaben zur Anordnung der Lesestationen 23 und zu den Auswerteschaltungen finden sich in der Patentanmeldung P 38 25 097.

Um mit den in einer Spur hintereinander angeordneten Codemarken 18, von denen jeweils fünf unmittelbar benachbarte gleichzeitig gelesen werden, eindeutig die Stellung der Laufkatze 4 längs der Laufschiene 2 lesen zu können, muß längs der Laufschiene 2 jede beliebige Gruppe von fünf nebeneinanderliegenden Codemarken 18 eindeutig sein, d.h. diese Gruppe darf längs der Laufschiene 2 nur ein einziges Mal auftreten. Nachfolgend wird für eine Gruppe von fünf nebeneinanderliegenden Codemarken 18 der Begriff Codewort verwendet.

Mit fünf Lesestationen 23 läßt sich eine fünfstellige Bitfolge lesen; als Zahl aufgefaßt wäre ihr größter Wert 31, so daß insgesamt 32 unterschiedliche Zahlenwerte unterschieden werden können. Allgemein ausgedrückt, können $N 0 x^m$ unterschiedliche Zahlen dargestellt werden, wo bei x die Wertigkeit einer Zahlenstelle und m die Anzahl der Zahlenstellen ist. Die größte darstellbare Zahl ist demnach $N = x^m-1$. Je größer also die Anzahl der Lesestationen 23 ist, umso mehr unterschiedliche Zahlen und damit Positionen der Laufkatze 4 können voneinander unterschieden werden. Das Auflösungsvermögen der Positioniergenauigkeit ergibt sich im wesentlichen aufgrund der Erstreckung einer Codemarke 18 in Längsrichtung der Laufschiene 2, da innerhalb einer Codemarke die Lesestation 23 beliebig stehen kann, ohne daß sich die abgelesene Ziffer verändert.

Es versteht sich, daß aus diesem Grund in der Praxis eine weit höhere Anzahl von Lesestationen 23 verwendet wird, um bei den in der Praxis vorkommenden Längen von Laufschienen 2 eine Positioniergenauigkeit von beispielsweise 1 cm erreichen zu können. Die gezeigte Anzahl von Lesestationen 23 ist darum nur beispielhaft und deswegen so niedrig, damit das Verständnis nicht unnötig kompliziert wird.

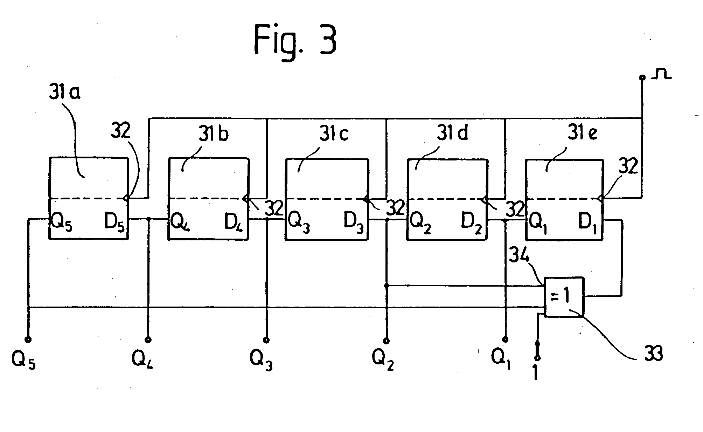

Zahlenfolgen, die die obige Bedingung erfüllen, daß jede Zahl innerhalb der Folge lediglich ein einziges Mal auftritt, sind sogenannte Pseudozufallszahlen. Sie lassen sich nach der Theorie der "Primitiv-Polynome" mit Hilfe eines linear rückgekoppelten Schieberegisters erzeugen, dessen Anzahl von Stellen der Anzahl der Stellen in dem binären Codewort entspricht. Anhand von Fig. 3 ist für einen fünfstelligen Code das erzeugende Schieberegister dargestellt. Es enthält insgesamt fünf D-Flipflops 31a...31e deren Takteingänge 32 parallelgeschaltet sind, so daß sie gleichzeitig ihren Zustand ändern. Welchen Zustand sie jeweils nach dem Taktimpuls annehmen, hängt davon ab, welchen Zustand der Q-Ausgang des jeweils vorhergehenden Flipflops 31a...31e hatte, denn der D-Eingang des Flipflops 31a ist mit dem Q-Ausgang des Flipflops 31b verbunden, der D-Eingang des Flipflops 31b mit dem Q-Ausgang des Flipflops 31c usw., bis hin zu dem Flipflop 31e . An dessen D-Eingang liegt ein modulo-2 Addierer 33 mit drei Eingängen 34, von denen der eine mit dem Q-Ausgang des Flipflops 31d und der andere mit dem Q-Ausgang des Flipflops 31a verbunden ist, während in den dritten schließlich ständig eine binäre Eins eingespeist wird. Ein modulo-2 Addierer 33 hat die Eigenschaft, daß sein Ausgang dann und nur dann eine logische Eins abgibt, wenn eine ungerade Anzahl seiner Eingangsanschlüsse im Zustand logisch eins ist.

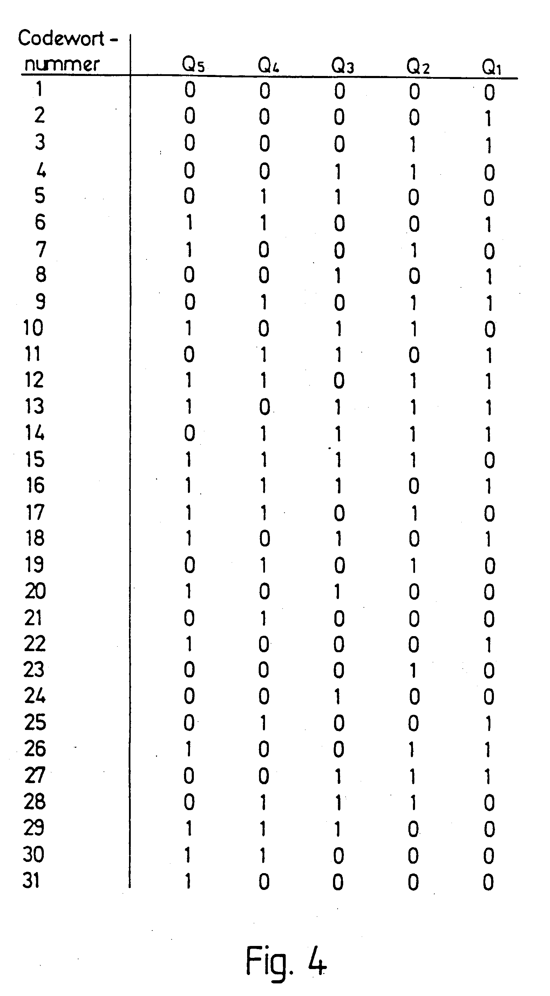

Wenn nun vor dem Eingeben des ersten Taktimpulses sämtliche D-Flipflops 31a...31e zurückgesetzt sind, d.h. an ihrem Q-Ausgang liegt ein L-Signal an, dann sind zwei der Eingänge 34 des modulo-2 Addierers 33 auf ebenfalls L, während der dritte Eingang ein H-Signal bekommt, womit auch der Ausgang des modulo-2 Addierers 33 einen H-Pegel führt, der dem D-Eingang des Flipflops 31e zugeführt wird. Nach dem Verschwinden des Taktimpulses ist deswegen das Flipflop 31e im Zustand eins, während die übrigen Flipflops nach wie vor im Zustand null sind. Nach dem zweiten Taktimpuls sind die beiden Flipflops 31e und 31d im Zustand eins, während die übrigen Flipflops nach wie vor den Zustand null haben. Da jetzt der modulo-2 Addierer 33 an zweien seiner Eingänge 34 ein H-Signal bekommt, wechselt sein Ausgang auf L, d.h. mit dem nächsten Taktimpuls zieht das Schieberegister eine Null herein und es ist das Flipflop 31e im Zustand null. Die beiden Flipflops 31c und 31d sind im Zustand eins, während schließlich die Flipflops 31a und 31b wiederum den Zustand null haben. Die weiteren Zustände, die die Flipflops 31a...31e bei den weiteren aufeinanderfolgenden Takten annehmen können, sind in der Tabelle aus Fig. 4 dargestellt. Ersichtlicherweise tritt innerhalb einer Periodenlänge von insgesamt 31 Zahlen jede fünfstellige Binärzahl nur einmal auf. Die Bitfolge 11111 ist in der Periode des rückgekoppelten Schieberegisters aus Fig. 3 nicht enthalten.

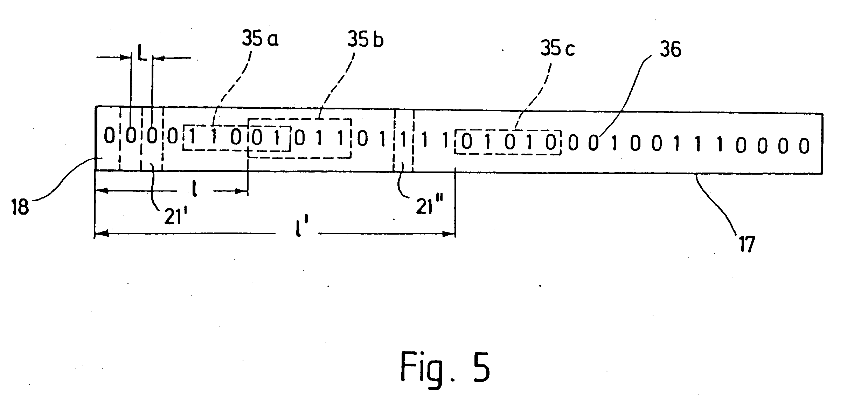

Wenn man nun die an dem Q-Ausgang des Flipflops 31b nacheinander entstehenden Binärziffern von links nach rechts aufschreibt, so erhält man die in Fig. 5 dargestellte Codemarkenfolge, die von drei zusätzlichen Nullen abgeschlossen ist. Jeweils fünf aufeinanderfolgende Binärziffern in Fig. 5 stellen ein Codewort 35 aus der Tabelle aus Fig. 4 dar. Jedes dieser Codeworte 35 kommt in Fig. 5 nur ein Mal vor. Die beiden ebenfalls möglichen Codeworte 00000 und 11111 treten in Fig. 5 nicht auf, sie sind für die Lücken reserviert.

Die in Fig. 5 niedergeschriebenen Binärziffern 36 symbolisieren die Codemarken 18, die hier zu einem Block 17 zusammengefaßt sind. Eine 0 entspricht einem Feld 21' und eine 1 entspricht einem Feld 21" aus Fig. 2. Der Mittenabstand zweier benachbarter Codemarken 18 ist L. Er entspricht der Längserstreckung einer Codemarke.

Für jedes aus Fig. 5 gelesene Codewort 35 läßt sich eindeutig entscheiden, um das wievielte Codewort aus der Tabelle nach Fig. 4 es sich handelt. Wieviele Schritte folglich notwendig sind, um von dem Codewort 00000 zu dem jeweiligen gelesenen Codewort 35 zu kommen. Die fünfstellige Bitfolge mit der Bezugsziffer 35a entspricht nach der Tabelle aus Fig. 4, z.B. dem Codewort mit der Nummer 6. Entsprechend hat die Bitfolge 35b die Codewortnummer 9 und die Bitfolge 35c die Codewortnummer 19.

Um jetzt den Abstand der Bitfolge 35 zu dem Anfang des Blockes 17 zu berechnen, muß man die korrigierte Codewortnummer mit dem Mittenabstand L multiplizieren, denn es ist noch zu berücksichtigen, daß das Codewort 00000 in dem Block 17 nicht vorkommt. Der Abstand der Bitfolge 35b zu dem Anfang des Blockes 17 berechnet sich also zu: $l = L \times (9 - 2)$. Entsprechend bestimmt sich der Abstand der Bitfolge 35c zu dem Anfang des Blockes 17 zu: $l' = L \times (19 - 2)$.

Aufgrund des gelesenen Codewortes läßt sich also eindeutig feststellen, wo sich die Laufkatze 4 längs des Blockes 17 befindet.

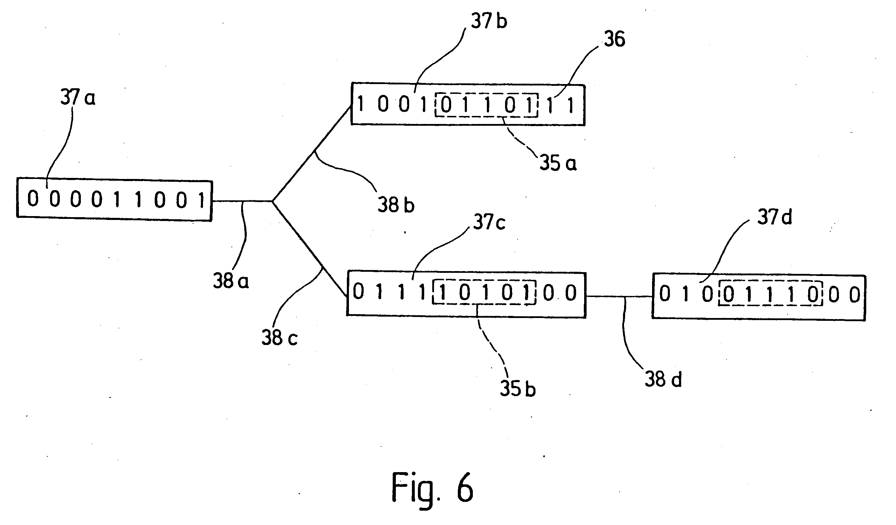

In Fig. 5 erstreckt sich der Block 17 über den gesamten zur Verfügung stehenden Fahrweg. Entsprechend der Erfindung kann der Fahrweg jetzt in interessierende Bereiche 37, in denen die Position der Fahrzeuge bekannt sein muß und in nicht interessierende Bereiche 38, die die Bereiche 37 miteinander verbinden, aufgeteilt werden. Dies ist in Fig. 6 am Beispiel eines verzweigten Fahrweges in einer stark schematisierten Darstellung gezeigt.

In den Bereichen 37 sind Codemarken 18 angeordnet, die zu Blöcken 17 zusammengefaßt sind. In Fig. 6 sind, wie in Fig. 5, die Codemarken durch die Binärziffern 36 symbolisiert. Im folgenden werden für die den Bereichen 37 zugeordneten Blöcken dieselben Bezugszeichen verwendet wie für die Bereiche 37 selbst. In den Bereichen 38 sind keine Codemarken vorhanden. Diese Bereiche stellen Lücken 19 dar. Im folgenden werden für die Lücken dieselben Bezugszeichen verwendet wie für die Bereiche 38.

Wie in Fig. 5 kommt jedes Codewort längs des verzweigten Fahrweges nur ein Mal vor. Der Block 37a enthält die Codeworte mit den Nummern 2 bis 6, der Block 37b die Codeworte mit den Nummern 7 bis 13, der Block 37c die Codeworte mit den Nummern 14 bis 20 und der Block 37d die Codeworte mit den Nummern 25 bis 30. Die Codewortenummern entsprechen den Nummern in der Tabelle nach Fig. 4.

Die in Fig. 6 dargestellte Adressierung mit fünfstelligen Codeworten ist nur beispielhaft. In der Praxis wird die Zahl der Stellen in einem Codewort höher sein, um innerhalb eines Blockes gegebener Länge genauer positionieren zu können oder um eventuell auch mehr Blöcke bilden zu können.

Es sei jetzt angenommen, daß sich ein Fahrzeug hier im Bereich 37b der Fahrstrecke befindet und die an dem Fahrzeug angebrachte Codelesevorrichtung 12 das Codewort 35a aus dem Block 37b liest und an die Auswerteeinheit 14 liefert. Mit Hilfe des Codewortes 35a kann jetzt die Position des Fahrzeuges 4, bezogen auf den Anfang des Bereiches 37a, wie folgt bestimmt werden:

Das Codewort 35a hat nach der Tabelle aus Fig. 4 die Codewortnummer 11. Läßt man die Lücken 38a und 38b zunächst außer Acht, so kann man den Abstand des Codewortes 35a zum Beginn des Blockes 37a genauso berechnen wie für Fig. 5 beschrieben. Man muß die korrigierte Codewortnummer mit dem Mittenabstand L multiplizieren. Dies ist zulässig, da die Codeworte des Blockes 37b direkt auf das letzte Codewort des Blockes 37a folgen. In einem Korrekturglied müssen jetzt noch die Länge a der Lücke 38a und die Länge b der Lücke 38b berücksichtigt werden. Der Abstand $l_a$ eines Fahrzeuges, dessen Codelesevorrichtung 12 das Codewort 35a liefert, zu dem Beginn des Bereiches 37a berechnet sich damit wie folgt: $l_a = L \times (11 - 2) + a + b$.

Jetzt sei angenommen, daß sich das Fahrzeug 4 in dem Bereich 37c befindet und daß die Codelesevorrichtung 12 das Codewort 35b liest. Das Codewort 35b hat die Codewortnummer 18. Der Abstand des Fahrzeuges 4 zu dem Beginn des Bereiches 37a läßt sich genauso berechnen wie oben beschrieben. Es ist jedoch zu berücksichtigen, daß die Codeworte des Blockes 37c nicht direkt auf das letzte Codewort des Bereiches 37a folgen, sondern daß die Codeworte aus dem Bereich 37b fehlen. Damit ist in dem Korrekturglied die Länge A des Bereiches 37b zu berücksichtigen. Der Abstand $l_b$ eines Fahrzeuges 4, dessen Codelesevorrichtung 12 das Codewort 35b liest, berechnet sich also wie folgt:

$l_b = L \times (18 - 2) + a + c - A)$. Die Länge c gibt die Länge der Lücke 38c wieder.

Bei einem verzweigten und in Blöcke und Lücken aufgeteilten Fahrweg, wie er in Fig. 6 schematisch dargestellt ist, ist es von großem Vorteil, wenn die Codeworte längs des Fahrweges nach aufsteigenden Codenummern aus der Tabelle nach Fig. 4 angeordnet sind. Einer nicht näher dargestellten Auswerteelektronik muß dann lediglich bekannt sein, welche Codemarkennummern in welchen Blöcken zu finden sind und welche Längen die Lücken zwischen den Blöcken aufweisen. Wie oben dargestellt, kann aus den Codewortnummern auf einfache Weise der Abstand zu einem Referenzpunkt, hier ist es der Anfang des Bereiches 37a, berechnet werden, wobei jedem Block ein Korrekturglied zugeordnet ist.

Die Codewortnummer des jeweils gelesenen Codewortes, das nicht als Zahlenwert aufgefaßt werden kann, wird entweder einem Speicher entnommen oder jedes Mal mit einem Schieberegister nach Fig. 3 neu generiert.

Die Blockkennung der in Fig. 6 schematisch dargestellten Blöcke 37 kann, wie in Fig. 2 dargestellt, in einer Parallelspur 23 erfolgen. Die Hilfslesevorrichtung 24 kann sich dabei über die gesamte Länge der Codelesevorrichtung 12 erstrecken.

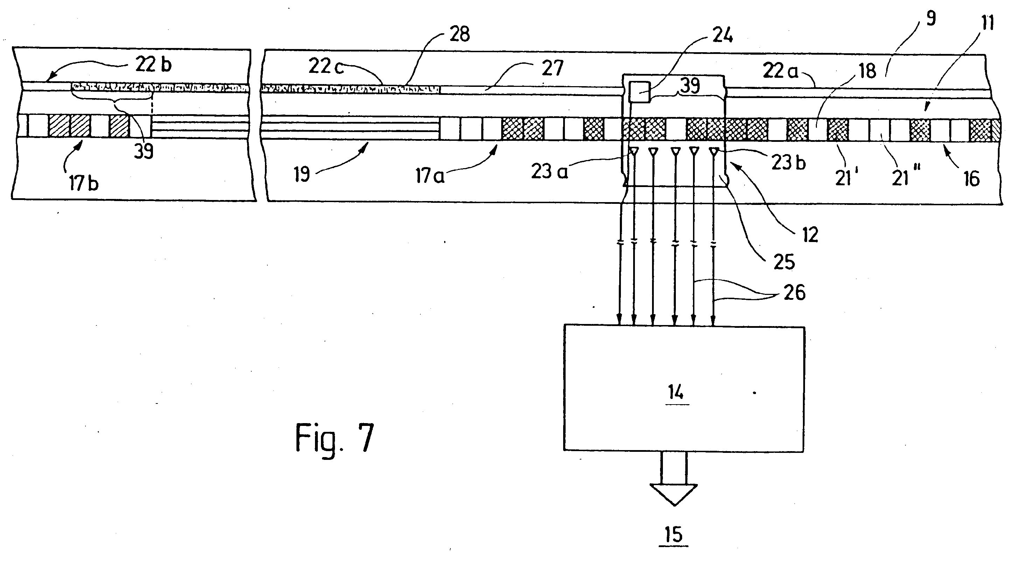

In einer weiteren in Fig. 7 dargestellten Ausführungsform kann die Hilfslesevorrichtung 24 nach Fig. 2 auch erheblich kürzer als die Codelesevorrichtung 12 und asymmetrisch zu den Lesestationen 23a angebracht sein. Die Hilfslesevorrichtung 24 ist, wie in Fig. 2, linksbündig mit dem Sensor 23a, aber um die Länge 39 kürzer als die Hilfslesevorrichtung in Fig. 2.

Da die Hilfslesevorrichtung 24 und die Codelesevorrichtung 12 linksbündig angeordnet sind, sind auch der Block 17a und das Feld 27 der Blockkennung 22 linksbündig angeordnet.

Wenn die Codelesevorrichtung aus der Lücke 19 kommend in den Block 19b hineinfährt, darf die Hilfslesevorrichtung 24 erst dann vollständig über einem Feld 27 stehen, wenn alle Lesestationen 23 vollständig in den Block 17b eingefahren sind. Das Feld 28 ragt deshalb um die Länge 39 überlappend in den Bereich des Blockes 17b hinein.

Ist die Hilfslesevorrichtung 24 neben der Codelesevorrichtung 12, also links von der Lesestation 23a angebracht, vergrößert sich die Länge 39 entsprechend. Das Feld 28 ragt jetzt um die neue Länge 39 überlappend in den Bereich des Blockes 17b hinein. Das Feld 27 erstreckt sich um die Breite der Hilfslesevorrichtung 24 in die Blocklücke 19. Wenn die Codelesevorrichtung 12 linksbündig am Anfang des Blockes 17a steht, befindet sich die Hilfslesevorrichtung 24 dann noch vollständig über dem Feld 27 und liest eine "1" und zeigt dadurch der Auswerteeinheit 14 an, daß die von der Codelesevorrichtung 12 gelieferten Signale ein gültiges Codewort darstellen.

Bei dem Ausführungsbeispiel in Fig. 7 können die Hilfslesevorrichtung und die Codelesevorrichtung nach unterschiedlichen physikalischen Prinzipien arbeiten. Die Hilfslesevorrichtung kann z.B. , wie oben erwähnt, eine Reflexlichtschranke umfassen und die Codelesevorrichtung Induktionsgeber. Die Marken 21' und 21" weisen dann eine unterschiedliche Permeabilität auf.

Es sind auch andere physikalische Prinzipien denkbar, nach denen die Lesestationen arbeiten. So kann z.B. die Hilfslesevorrichtung einen mechanischen Endschalter enthalten und die Blockkennung den Endschalter im Bereich von Lücken einschalten und im Bereich von Blöcken ausschalten. Die Lesestationen 23 der Codelesevorrichtung 12 können z.B. kapazitive Effekte erfassen und die Codemarken 21' und 21" unterschiedliche Dielektrizitätszahlen aufweisen.

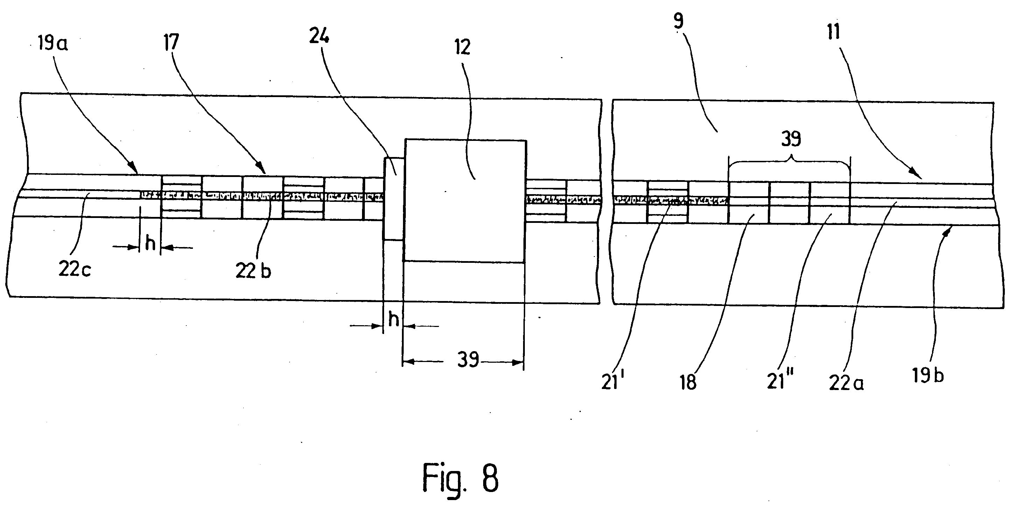

In einem weiteren Ausführungsbeispiel in Fig. 8 ist die Blockkennung 22 in der Spur des Blockes 17. Fig. 8 zeigt in stark schematisierter Darstellung einen Ausschnitt aus der Schiene 9, auf der der Codeträger 11 befestigt ist. Entlang der Längserstreckung des Codeträgers 11 sind Codemarken 18 vorgesehen, die zu einem Block 17 zusammengefaßt sind. Der Block 17 ist von zwei Lücken 19a, 19b benachbart. Die Codemarken 18 werden mittels der Codelesevorrichtung 12 abgetastet und die Blockkennung 22 wird von der Hilfslesevorrichtung 24 gelesen.

Die Lesestationen der Hilfslesevorrichtung 24 und der Codelesevorrichtung 12 sind der Übersichtlichkeit halber genauso wenig dargestellt wie die an sie angeschlossene Auswerteeinheit 14. Der Codeträger 11 kann, wie in Fig. 2, ein transmissiver Codeträger sein, der je nach Wertigkeit der Codemarke mehr oder weniger Licht durchläßt. Die Hilfslesevorrichtung. 24 arbeitet nach einem anderen physikalischen Prinzip als die Lesestationen 23 der Codelesevorrichtung 12.

Die Hilfslesevorrichtung 24 ist, wie in Fig. 7, neben der Codelesevorrichtung 12 angebracht. Die Blockkennung 22b erstreckt sich deshalb um die Breite h der Hilfslesevorrichtung 24 über den Block 17 in den Bereich der Lücke 19a hinein. An dem anderen Ende des Blockes 17, der der Lücke 19b zugewandt ist, endet die Blockkennung 22b im Bereich des Blockes 17. Das rechte Ende des Blockes 17 reicht um die Länge 39 der Codelesevorrichtung 12 über das rechte Ende der Blockkennung 22b hinaus. Dadurch wird, wie in Fig. 7, sichergestellt, daß die Hilfslesevorrichtung 24 von der Blockkennung 22b liest, wenn alle Lesestationen 23 der Codelesevorrichtung 12 über Codemarken 18 aus dem Block 17 stehen.

Die Hilfslesevorrichtung 24 arbeitet hier z.B. nach einem induktiven Prinzip und die Blockkennung 22 weist in dem Bereich 22b, der dem Block 17 logisch zugeordnet ist, eine andere Permeabilität auf als in den Bereichen 22a und 22c, die den Lücken 19a und 19b zugeordnet sind.

Vorteil der Anordnung nach Fig. 8 ist der geringe Platzbedarf der Blockkennung 22, die nicht in Form einer Parallelspur neben dem Block 17 angebracht ist.

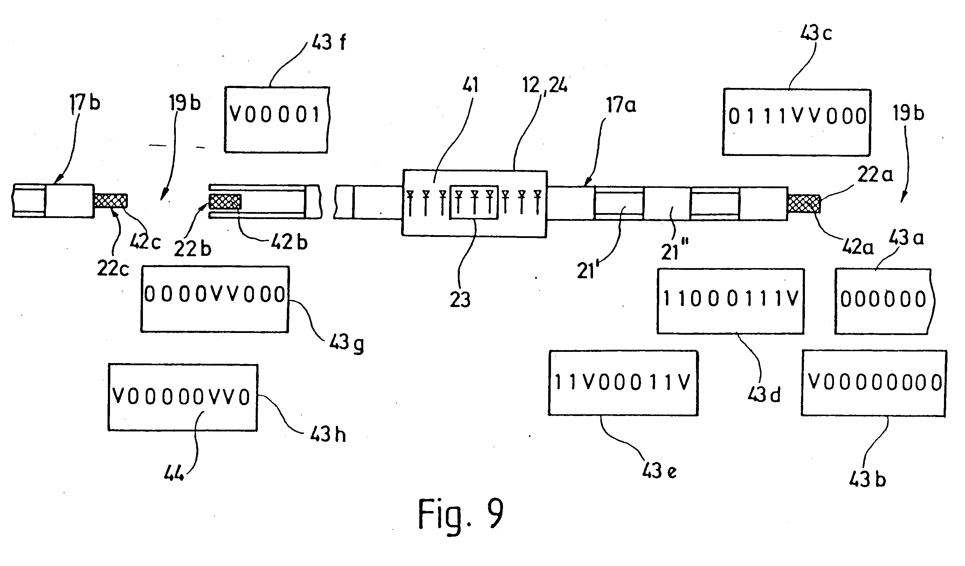

Ein weiteres Ausführungsbeispiel für eine Blockkennung, die sich in der Spur des Blockes befindet, ist in Fig. 9 stark schematisiert dargestellt. Im Gegensatz zu Fig. 8 arbeiten hier die Codelesevorrichtung 12 und die Hilfslesevorrichtung 24 nach dem gleichen physikalischen Prinzip.

Wie in Fig. 8 ist auch in Fig. 9 ein transmissiver Codeträger 11 dargestellt, der lichtdurchlässige Codemarken 21′ und lichtundurchlässige Codemarken 21″ trägt, die zu einem Block 17a zusammengefaßt sind. An die Lücke 19b schließt sich ein weiterer Block 17b an. Die Blockkennung 22 ist hier am Anfang und am Ende des Blockes 17 vorgesehen. Anfang und Ende beziehen sich hier auf die Richtung des Fahrweges und sind willkürliche Bezeichnungen, die lediglich der vereinfachten sprachlichen Darstellung dienen.

Jede Lesestation 23 der Codelesevorrichtung 12 enthält drei Sensoren 41, die hier als Gabellichtschranke ausgebildet sind. Wie schon oben erwähnt, können so Lesefehler korrigiert werden, die durch eine nicht gleichmäßige Teilung der Codemarken 18 und/oder durch unterschiedliches Ansprechverhalten der Sensoren 41 hervorgerufen werden. Die Hilfslesevorrichtung 24 wird durch die Sensoren 41 der Codelesevorrichtung 12 gebildet.

Im Bereich der Lücken 19 lesen die Sensoren 21 denselben Codemarkenwert wie bei der lichtdurchlässigen Codemarke 21′. Der Codemarke 21′ ist eine "0" zugeordnet. Sensoren 41, die im Bereich der Lücke 19 stehen, lesen also eine "0".

Die Blockkennung 22 besteht aus einem Abschwächer 42, der hier in Form eines Gitters realisiert ist. Die Länge des Gitters 42 in Richtung des Fahrweges entspricht etwa dem Mittenabstand zweier benachbarter Sensoren 41. Wenn der Block 17a mit einer "1"-Codemarke 21″ endet, ist das Gitter 42a vor dem Block 17a im Bereich der Lücke 19b angeordnet. Endet der Block mit einer "0"-Codemarke 21′, ist das Gitter 42b so über dem Block angeordnet, daß es mit dem Blockanfang oder -ende abschließt. Dem Gitter wird dasselbe Bezugszeichen zugeordnet wie dem Abschwächer 42. Die Gitter 42 schwächen das Licht des Senders in der Gabellichtschranke der Sensoren 41 so weit ab, daß die Sensoren 41 einen Zwischenzustand "V" anzeigen, der weder eine "0" noch eine "1" darstellt. Die Signale der Codelesevorrichtung 12 liefern ein Lesemuster 43, in dem die drei logischen Zustände "0", "1", "V" auftauchen können. Die in Fig. 9 nicht weiter dargestellte Auswerteeinheit 14 kann aus diesem Lesemuster 43 entscheiden, in welchem Bereich des Fahrweges sich die Codelesevorrichtung 12 befindet:

In Fig. 9 sind die Lesemuster 43 positionsrichtig zu den Blöcken 17 und Lücken 19 dargestellt. Sie geben die logischen Signalpegel 44 wieder, die die Sensoren 41 der Codelesevorrichtung 12 in den entsprechenden Positionen liefern.

Im folgenden werden die Bezugszeichen der Lesemuster 43 auch für die jeweilige Position eines Fahrzeuges 4, dessen Codelesevorrichtung 12 über seine Sensoren 41 das zugehörige Lesemuster erfaßt, verwendet.

Es sei angenommen, daß ein Fahrzeug 4 aus dem Bereich der Lücke 19b in den Bereich des Blockes 17a hineinfährt. In Position 43a enthält das Lesemuster eine Folge von "0"en. Dieses Lesemuster zeigt an, daß sich das Fahrzeug vollständig im Bereich der Lücke 19b befindet. Fährt das Fahrzeug weiter in Position 43b, zeigt der linke Sensor 41 ein "V"-Signal. Dieses Lesemuster ist kennzeichnend für eine Stellung ganz am Anfang eines Blockes.

Fährt das Fahrzeug 4 weiter in den Block hinein, so erscheinen im Lesemuster 43c zwei nebeneinanderliegende "V"-Signale. Diese Position deutet genauso wie die Position 43g an, daß sich das Fahrzeug im Übergangsbereich zwischen Lücke 19 und Block 17 befindet. Erreicht das Fahrzeug die Position 43d, so liefert nur noch der rechte Sensor 41 ein "V"-Signal. Dieses Lesemuster stellt ein gültiges Codewort dar. Es unterscheidet sich von der Position 43b,in der ebenfalls nur ein "V"-Signal erscheint, dadurch, daß außer den "0"en auch "1"en vorhanden sind. Das gleiche gilt für die Position 43f. Mit Hilfe der beiden nebeneinander auftretenden "V"-Signale in Position 43c kann die genaue Position der Codelesevorrichtung zum Blockanfang oder Blockende bestimmt werden. In Position 43c geben z.B. die Sensoren von links gezählt 5 und 6 die "V"-Signale wieder. Das Fahrzeug ist also um die Breite von vier Sensoren in den Block eingefahren. Entsprechendes gilt auch für die Position 43g.

In Position 43e befindet sich das Fahrzeug vollständig im Bereich des Blockes 17a. Hier ist angenommen, daß zwei Sensoren genau in der Mitte zwischen einer "0" und einer "1" stehen und ein "V"-Signal wiedergeben. Es ist jedoch nicht möglich, daß zwei nebeneinanderliegende Sensoren ein "V" darstellen, so daß alle Lesemuster, in denen eine oder mehrere isolierte "V"-Signale vorkommen und zusätzlich "0"en und "1"en auftritt, gültige Codeworte wiedergeben. Das Codewort in Position 43e ist z.B. 101.

Die hier dargestellte Art der Blockkennung 22 durch Gitter 42 ermöglicht es, die Lücke 19 zwischen zwei Blöcken 17 so kurz zu machen, daß die Codelesevorrichtung 12 gleichzeitig Signale aus einem Block 17a und einem anderen Block 17b liest. Dies entspricht der Position 43h. Das "V" am Anfang und die beiden "V" nebeneinander zeigen an, daß das Fahrzeug sich in der Position 43h zwischen zwei sehr dicht nebeneinanderliegenden Blöcken 17a, 17b befindet.

Diese Art der Blockkennung kann besonders vorteilhaft im Bereich von Weichen und Verzweigungen des Fahrweges eingesetzt werden, weil die Abstände zwischen verschiedenen Blöcken sehr gering sein können.

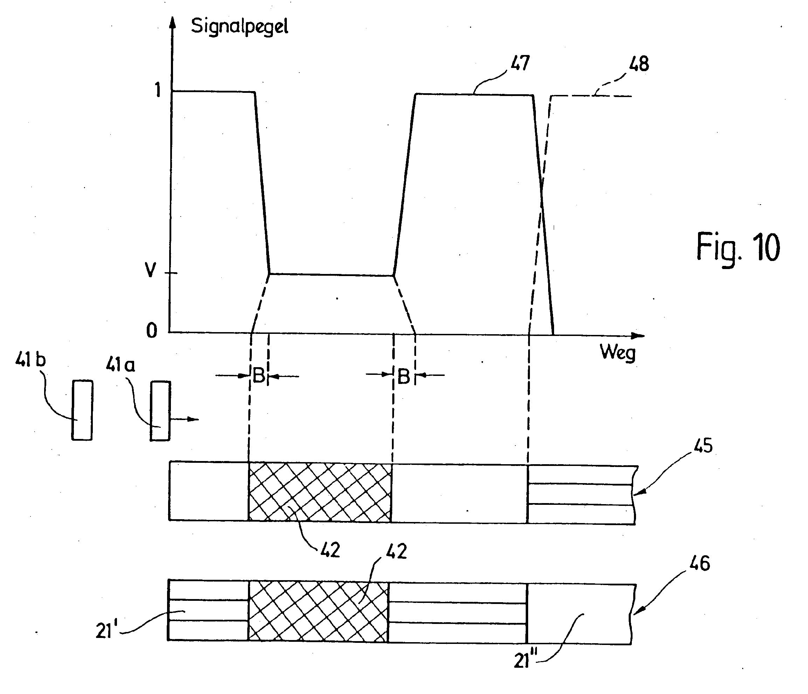

Fig. 10 gibt den Signalverlauf in dem Sensor 41 wieder, der über die Codemarkenfolge 45, 46 bewegt wird. Die Codemarkenfolge 45 repräsentiert einen Signalverlauf 46 von 1V10 und die Codemarkenfolge 46 einen Signalverlauf 48 mit 0V01. Es ist ersichtlich, daß der Übergang von einem Signalpegel zu einem anderen auf der Breite b des Sensors 41 erfolgt. Es ist ersichtlich, daß auch bei dem Übergang von einer "0" zu einer "2" ein Zustand auftritt, der dem Zustand "V" entspricht. Dies sind die für die Position 43e aus Fig. 9 angenommenen Lesefehler. Dieser Lesefehler kann jedoch nicht in zwei nebeneinanderliegenden Sensoren 41a, 41b auftreten. Zwei nebeneinanderliegende Sensoren 41 zeigen nur dann beide ein "V"-Signal, wenn sie über einem Gitter 42 stehen.

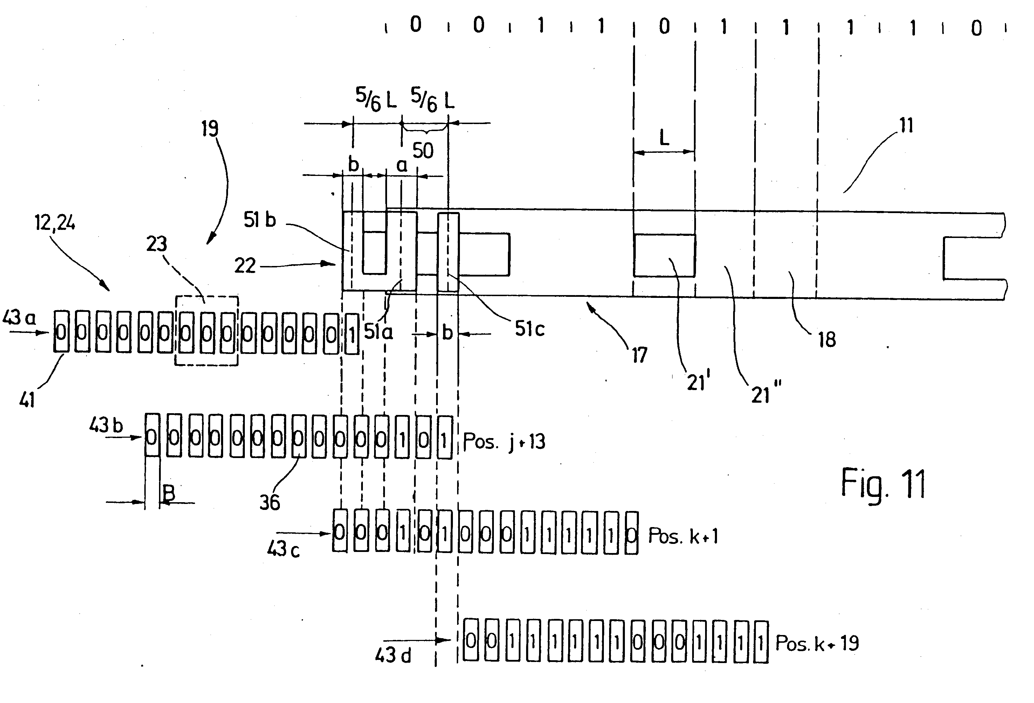

In Fig. 11 ist ein weiteres Ausführungsbeispiel für eine Blockkennung 22, die sich in der Spur des Blockes 17 befindet in stark schematisierter Form dargestellt. Wie in Fig. 9 arbeiten auch hier die Codelesevorrichtung 12 und die Hilfslesevorrichtung 24 nach dem gleichen physikalischen Prinzip. Die Hilfslesevorrichtung 24 ist durch Sensoren 41 der Codelesevorrichtung 12 gebildet. Jede der fünf Lesestationen 23 der Codelesevorrichtung 12 umfaßt drei Sensoren 41.

Fig. 11 zeigt den Anfang eines Blockes 17, der Codemarken 18 trägt, die eine Folge 0011011110 codieren. Die Länge einer Codemarke ist, wie oben, L.

Die Blockkennung 22 besteht aus drei Kennmarken 51, die zueinander einen Mittenabstand von 5/6 L haben. Der Anfang der Kennmarke 51a fällt mit dem Anfang der ersten 0-Codemarke zusammen. Die Kennmarke 51c sitzt etwa mittig über der vom Blockanfang gezählt zweiten 0-Codemarke. Der Mittenabstand 50 zwischen den Kennmarken 51a und 51c beträgt allgemein ausgedrückt $\dfrac{2P + 1}{6}$ L, wobei P größer 1 ist. In Fig. 11 ist P 0 2.

Die Länge der Kennmarken 51 in Richtung des Fahrweges beträgt etwa ein Drittel L. Die Länge b der Kennmarke 51b ist so gewählt, daß sie immer nur in einem Sensor,der etwa mittig über der Codemarke 51b positioniert ist, eine "1" erzeugt. Dies ist im Lesemuster 43a dargestellt. Entsprechendes gilt für die Kennmarke 51c, wie im Lesemuster 43b zu erkennen ist. Befinden sich zwei nebeneinanderliegende Sensoren 41 über der Kennmarke 51b, so weisen beide Sensoren eine "0" auf. Dies ist in Position 43b zu erkennen. Für die Kennmarke 51c gilt entsprechendes.

Die Länge a der Kennmarke 51a ist so gewählt, daß sie in zwei nebeneinanderliegenden Sensoren eine "1" erzeugen kann.

Die effektive Länge B der Sensoren 41 in der Ebene des Codeträgers 11 ist im Vergleich zur Länge L einer Codemarke erheblich. Für die Länge a der Kennmarke 51a und für die Länge b der Kennmarke 51b, 51c, ergibt sich mit dem oben Gesagten folgender Zusammenhang:

$$a = \frac{1}{3}L + B + \Delta x \quad \text{und} \quad b = \frac{1}{3}L + B - \Delta y.$$

In den Korrekturgliedern $\Delta x$ und $\Delta y$ sind die Toleranzen von B und L berücksichtigt.

Es sei angenommen, daß ein Fahrzeug 4 in dem Bereich des Blockes 17 einfährt. Die Codelesevorrichtung 12 des Fahrzeuges 4 liefert dann ein Codemarkenmuster, dem ein Kennmarkenmuster überlagert ist. In Fig. 11 sind Signalmuster 43 für verschiedene Positionen der Codelesevorrichtung, bezogen auf den Block 17, dargestellt. In den zu den Lesemustern 43a, 43b, 43c gehörenden Fahrzeugpositionen befindet sich das Fahrzeug im Übergangsbereich zwischen Lücke 19 und Block 17. Dies wird der Auswerteeinheit 14 durch ein Signalmuster 010 oder 101 angezeigt. Eine Signalfolge, in der drei nebeneinanderliegende Sensoren 41 alternierende Wertigkeiten wiedergeben, ist nur im Bereich der Blockkennung 22 möglich. Liest die Codelesevorrichtung 12 Signal von Codemarken 18, so haben mindestens zwei nebeneinanderliegende Sensoren 41 einer Lesestation 23, wie bereits oben erwähnt, den gleichen logischen Signalwert.

In der nachfolgenden Tabelle sind die Lesemuster 43 aufgeführt, die beim Einfahren des Fahrzeuges 4 in den Block auftreten. Die verschiedenen Lesemuster 43 in der Tabelle unterscheiden sich durch die Anzahl der Schritte, die die Codelesevorrichtung in den Block hineingefahren ist. Unter Schritt ist in diesem Zusammenhang keine konstante Länge zu verstehen. Die Schrittweite ist vielmehr variabel und so gewählt, daß nach jedem Schritt in mindestens einem der Sensoren 41 der Codelesevorrichtung 12 ein Signalwechsel stattgefunden hat.

| Logischer Wert der Sensoren | Schritt | Codewort gültig | ungültig |
|---|---|---|---|
| 0 0 0  0 0 0  0 0 0  0 0 0  0 0 1 | j + 1 |  | x (Anfang) |
| 0 0 0  0 0 0  0 0 0  0 0 0  0 0 0 | .. + 2 |  | x (Lücke) |
| 0 0 0  0 0 0  0 0 0  0 0 0  0 1 0 | .. + 3 |  | x |
| 0 0 0  0 0 0  0 0 0  0 0 0  0 0 0 | .. + 4 |  | x (Lücke) |
| 0 0 0  0 0 0  0 0 0  0 0 0  1 0 0 | .. + 5 |  | x |
| 0 0 0  0 0 0  0 0 0  0 0 0  1 0 1 | .. + 6 |  | x |
| 0 0 0  0 0 0  0 0 0  0 0 0  0 0 1 | .. + 7 |  | x (Anfang) |
| 0 0 0  0 0 0  0 0 0  0 0 1  0 0 1 | .. + 8 |  | x |
| 0 0 0  0 0 0  0 0 0  0 0 1  0 1 1 | .. + 9 |  | x |
| 0 0 0  0 0 0  0 0 0  0 0 0  0 1 0 | .. +10 |  | x |
| 0 0 0  0 0 0  0 0 0  0 1 0  0 1 0 | .. +11 |  | x |
| 0 0 0  0 0 0  0 0 0  0 1 0  1 1 0 | .. +12 |  | x |
| 0 0 0  0 0 0  0 0 0  0 0 0  1 0 1 | j +13 |  | x |
| 0 0 0  1 0 1  0 0 0  1 1 1  1 1 0 | k + 1 |  | x |
| 0 1 0  1 0 0  0 0 0  1 1 1  1 1 1 | ..+ 2 |  | x |
| 0 0 0  1 0 0  0 0 0  1 1 1  1 1 1 | ..+ 3 |  | x |
| 1 0 0  1 0 1  0 0 0  1 1 1  1 1 0 | ..+ 4 |  | x |
| 1 0 1  1 0 1  0 0 1  1 1 1  1 1 0 | ..+ 5 |  | x |
| 1 0 1  0 0 0  0 0 1  1 1 1  1 1 0 | ..+ 6 |  | x |
| 0 0 1  0 0 0  0 0 1  1 1 1  1 1 0 | ..+ 7 |  | x |
| 0 0 1  0 1 0  0 1 1  1 1 1  1 0 0 | ..+ 8 |  | x |
| 0 1 1  0 1 0  0 1 1  1 1 1  1 0 0 | ..+ 9 |  | x |
| 0 1 0  0 0 0  0 1 1  1 1 1  1 0 0 | ..+ 10 |  | x |
| 1 1 0  1 0 0  1 1 1  1 1 1  0 0 0 | ..+ 11 |  | x |
| 1 0 0  0 0 0  1 1 1  1 1 1  0 0 0 | ..+ 12 | x |  |
| 1 0 1  0 0 0  1 1 1  1 1 0  0 0 0 | ..+ 13 |  | x |
| 0 0 1  0 0 1  1 1 1  1 1 0  0 0 1 | ..+ 14 |  | x |
| 0 0 0  0 0 1  1 1 1  1 1 0  0 0 1 | ..+ 15 | x |  |
| 0 1 0  0 1 1  1 1 1  1 0 0  0 1 1 | ..+ 16 |  | x |
| 0 0 0  0 1 1  1 1 1  1 0 0  0 1 1 | ..+ 17 | x |  |
| 1 0 0  1 1 1  1 1 1  0 0 0  1 1 1 | ..+ 18 | x |  |
| 0 0 1  1 1 1  1 1 0  0 0 1  1 1 1 | k + 19 | x |  |

Der Schritt j + 1 weist eine "1" am Rand auf, die Codelesevorrichtung 12 steht dann ganz am Anfang des Blockes 17. Das Lesemuster des Schrittes j + 2 und j + 4 liefert nur "0"en. Dieses Lesemuster ist der Lücke 19 zugeordnet und wird als ungültig erkannt. Die Lesemuster der Schritte j + 3 und j + 5 bis j + 13 weisen eine 010 oder 101 Folge auf und werden ebenfalls als ungültig erkannt.

Auch die Lesemuster der Schritte k + 1 bis k + 11 sowie k + 13, k + 14 und k + 16 weisen eine 010 oder 101 Folge auf und sind dementsprechend ungültig. Die Schritte k + 12, k + 15 und k + 17 bis k + 19 sind dagegen gültige Codemarken.

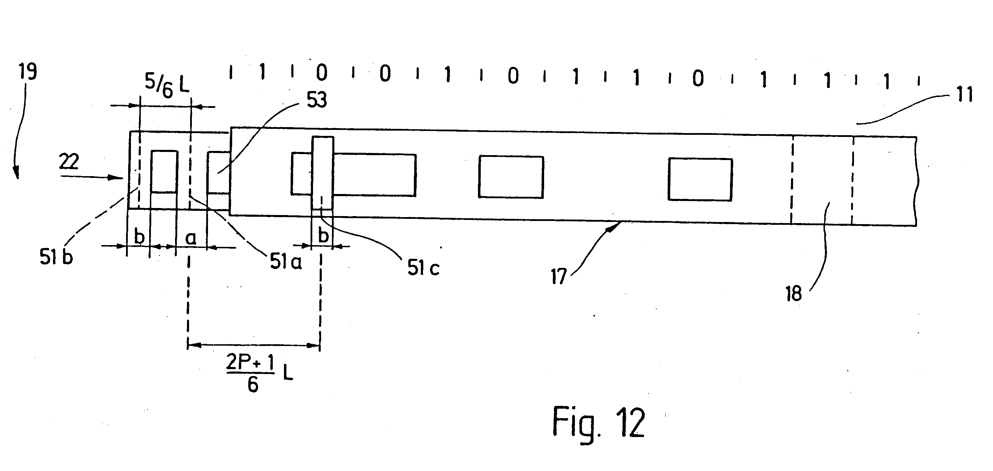

In Fig. 12 ist entsprechend Fig. 11 eine Ausführungsform dargestellt, bei der die Blockkennung 22 in Form von Kennmarken 51 in der Spur des Blockes 17 ist. Im Gegensatz zu Fig. 11 beginnt in Fig. 12 das Codemarkenmuster mit einer "1"-Codemarke. Die Kennmarken 51b und 51a weisen zueinander wieder einen Mittenabstand von $\frac{5}{6}$ x L auf und weisen die gleichen Längen a und b auf wie in Fig. 11. Hier befindet sich nicht nur die Kennmarke 51b, sondern auch die Kennmarke 51a im Bereich der Lücke 19 vor dem Block 17. Die Kennmarke 51b befindet sich etwa mittig über der ersten "0"-Codemarke in dem Block 17. Der Mittenabstand zwischen der Kennmarke 51a und der Kennmarke 51c beträgt 2 P + $\frac{1}{6}$ L, wobei P eine ganze Zahl größer als 1 ist. Die Zahl P ist so gewählt, daß zwischen der Kennmarke 51a und der ersten Codemarke des Blockes 17 eine weitere Kennmarke 53 entsteht, deren Länge in Richtung des Fahrweges größer ist als die Länge B eines Sensors 41. Die Kennmarke 53 enthält, wie die Codemarken 51′, einen lichtdurchlässigen Bereich und repräsentiert eine logische "0". Durch diese Anordnung der Kennmarken 51 ergibt sich, wie schon in Fig. 11, ein Lesemuster 43, in dem Signalfolgen 010 oder 101 nur dann auftreten, wenn die Codelesevorrichtung 12 im Übergangsbereich zwischen Block 17 und Lücke 19 liest.

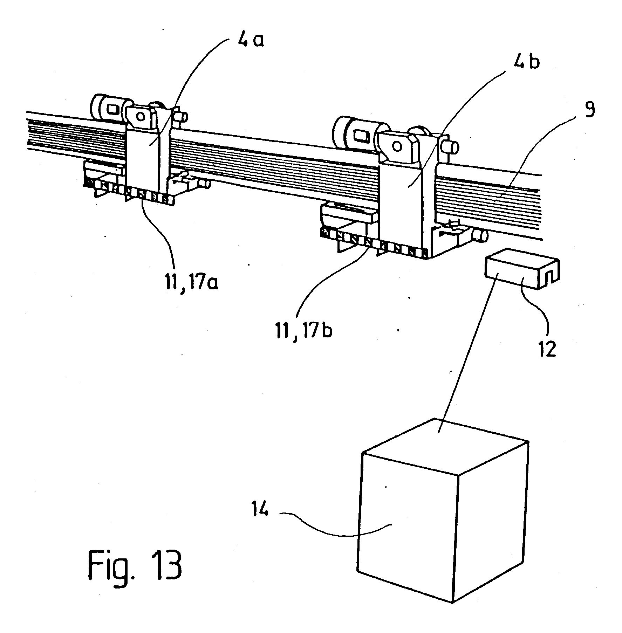

In Fig. 13 ist eine Positionsmeßvorrichtung gemäß der Erfindung dargestellt, bei der die Codeträger 11 an den Fahrzeugen 4 angebracht sind. Die Codelesevorrichtung 12 ist ortfest. Die Blöcke 17a, 17b, die sich auf den Codeträgern 11a, 11b befinden, sind den Fahrzeugen 4a, 4b eineindeutig zugeordnet. Anhand der gelesenen Codeworte 43 bestimmt die Auswerteeinheit 14 nicht nur die Position der Fahrzeuge 4a, 4b zu einer Referenzmarke, sondern erkennt auch, um welches Fahrzeug es sich handelt.

Vorteil dieser Anordnung ist, daß trotz einer großen Anzahl von Fahrzeugen 4 die Zahl der Codelesevorrichtungen 12 lediglich durch die Anzahl der Bereiche bestimmt wird, in denen die Fahrzeuge 4 genau positioniert werden müssen.

## Patentansprüche

1. Positionsmeßvorrichtung für längs festgelegter Bahnen laufende Fahrzeuge, vorzugsweise Kran- oder Elektrohängebahnen, die zumindest eine Laufschiene aufweisen, längs derer ein Fahrzeug läuft, mit mindestens einem in Richtung des Fahrweges angeordneten Codeträger (11), der entlang seiner Längserstreckung in lediglich einer Spur gemäß einer Pseudozufallsfolge mit vorgegebenem Bildungsgesetz gebildete Codemarken (18) trägt, wobei jeweils n aufeinanderfolgende Codemarken (18) ein Codewort (35) bilden und jedes Codewort (35) längs des Fahrweges nur einmal vorkommt, und mit mindestens einer Codelesevorrichtung (12), wobei Codeträger (11) und Codelesevorrichtung (12) in Richtung des Fahrweges relativ gegeneinander bewegbar sind, sowie mit einer mit der Codelesevorrichtung (12) verbundenen Auswerteeinrichtung (14) zum Auswerten der von der Codelesevorrichtung (12) gelesenen Codemarken (18), dadurch gekennzeichnet, daß zumindest einige der Codemarken (18), die entsprechend dem Bildungsgesetz der Pseudozufallsfolge unmittelbar aufeinander folgen, einen Block (17) bilden, dem eine Blockkennung (22) zugeordnet ist, und daß eine Hilfslesevorrichtung (24) für die Blockkennung (22) vorgesehen ist, derart, daß für die Auswerteeinheit (14) entscheidbar ist, ob sich die Codelevorrichtung (12) so im Bereich eines Blockes (17) befindet, daß die von der Codelesevorrichtung (12) gelieferten Signale gültige Codeworte (35) des Blockes (17) repräsentieren.

2. Positionsmeßvorrichtung nach Anspruch 1, dadurch gekennzeichnet, daß der Codeträger (11) ortsfest und die Codelesevorrichtung (12) an dem Fahrzeug (4 ) angebracht ist.

3. Positionsmeßvorrichtung nach Anspruch 1, dadurch gekennzeichnet, daß die Codelesevorrichtung (12) ortsfest und der Codeträger (11) an dem Fahrzeug (4 ) angebracht ist.

4. Positionsmeßvorrichtung nach Anspruch 1, dadurch gekennzeichnet, daß mindestens ein Codeträger (11) und mindestens eine Codelesevorrichtung (12) ortsfest und mindestens ein Codeträger (11) und mindestens eine Codelesevorrichtung (12) an dem Fahrzeug (4 ) angebracht sind.

5. Positionsmeßvorrichtung nach Anspruch 1, dadurch gekennzeichnet, daß in Richtung des Fahrweges mehrere Blöcke (17a, 17b) hintereinander angebracht sind und daß die Blöcke (17a, 17b) längs des Fahrweges durch Lücken (19) räumlich voneinander getrennt sind.

6. Positionsmeßvorrichtung nach Anspruch 5, dadurch gekennzeichnet, daß die Lücken (19) zumindest in Teilbereichen eine Folge identischer oder periodisch angeordneter Codemarken (18) enthalten.

7. Positionsmeßvorrichtung nach Anspruch 5, dadurch gekennzeichnet, daß die Lücken (19) keine Codemarken (18) oder keine Codemarkenkombinationen, die in den Blöcken auftreten können, enthalten.

8. Positionsmeßvorrichtung nach Anspruch 1, dadurch gekennzeichnet, daß das letzte Codewort eines Blockes (37a) entsprechend dem Bildungsgesetz der Pseudozufallsfolge vor dem ersten Codewort des direkt nachfolgenden Blockes (37c) liegt.

9. Positionsmeßvorrichtung nach Anspruch 1, dadurch gekennzeichnet, daß das letzte Codewort eines Blockes (37a) entsprechend dem Bildungsgesetz der Pseudozufallsfolge unmittelbar vor dem ersten Codewort des direkt nachfolgenden Blockes (37b) liegt.

10. Positionsmeßvorrichtung nach Anspruch 1, dadurch gekennzeichnet, daß die Blockkennung (22) in einer Parallelspur liegt.

11. Positionsmeßvorrichtung nach Anspruch 10, dadurch gekennzeichnet, daß die Parallelspur Kennmarken (27, 28) mit mindestens zwei Wertigkeiten aufweist, und daß die Signale der Codelesevorrichtung (12) nur dann lediglich Codemarken aus einem Block repräsentieren, wenn die Signale der Hilfslesevorrichtung (24) eine bestimmte Kennmarkenwertigkeit oder Kennmarkenfolge repräsentieren.

12. Positionsmeßvorrichtung nach Anspruch 11, dadurch gekennzeichnet, daß die Hilfslesevorrichtung (24) zumindest einen optischen Sensor enthält.

13. Positionsmeßvorrichtung nach Anspruch 12, dadurch gekennzeichnet, daß der optische Sensor eine Lichtschranke ist.

14. Positionsmeßvorrichtung nach Anspruch 1, dadurch gekennzeichnet, daß die Blockkennung (22) in der Spur des Blockes liegt.

15. Positionsmeßvorrichtung nach Anspruch 14, dadurch gekennzeichnet, daß die Blockkennung aus einem Teil (22a) besteht, der dem Block vorangeht, und aus einem weiteren Teil (22b), der den Block abschließt.

16. Positionsmeßvorrichtung nach Anspruch 14, dadurch gekennzeichnet, daß die Sensoren in der Hilfslesevorrichtung (24) nach einem anderen physikalischen Prinzip arbeiten als die Sensoren (41) in der Codelesevorrichtung (12), und daß die Blockkennung (22) sich über den ganzen Block erstreckt.

17. Positionsmeßvorrichtung nach Anspruch 14, dadurch gekennzeichnet, daß die Sensoren (41) in der Hilfslesevorrichtung (24) nach dem gleichen physikalischen Prinzip arbeiten wie die Sensoren (41) in der Codelesevorrichtung (12).

18. Positionsmeßvorrichtung nach Anspruch 15, dadurch gekennzeichnet, daß die Blockkennung (22) zumindest teilweise die Codemarken an dem Rand des zugeordneten Blocks (17) überdeckt oder außerhalb des Blocks (17) liegt.

19. Positionsmeßvorrichtung nach Anspruch 14 oder 18, dadurch gekennzeichnet, daß die Blockkennung (11) Mittel (22) enthält, die innerhalb bzw. außerhalb des jeweiligen Blocks in der Code- und/oder Hilfslesevorrichtung (12, 24) eine Signalpegelverschiebung bewirken.

20. Positionsmeßvorrichtung nach Anspruch 19, dadurch gekennzeichnet, daß die Mittel (22) einen auf die Art des Sensors (41) in der Hilfslesevorrichtung (24) abgestimmten Abschwächer (42) umfassen.

21. Positionsmeßvorrichtung nach Anspruch 20, dadurch gekennzeichnet, daß der Abschwächer (42) ein Gitter ist.

22. Positionsmeßvorrichtung nach Anspruch 14, dadurch gekennzeichnet, daß die Blockkennung (22) eine Folge von Kennmarken (51) umfaßt und daß zwischen dem Kennmarkenmuster und dem Codemarkenmuster ein Unterschied besteht.

23. Positionsmeßvorrichtung nach Anspruch 22, dadurch gekennzeichnet, daß die Kennmarken (51) auf zumindest einem Kennmarkenträger sitzen, und daß der oder die Kennmarkenträger auf dem Codeträger (11) die Codemarken (18) zumindest teilweise überdeckend oder in Richtung des Fahrweges neben dem Block angebracht sind.

24. Positionsmeßvorrichtung nach Anspruch 22, dadurch gekennzeichnet, daß der Unterschied darin besteht, daß, gemessen in Richtung des Fahrweges, die Länge der Kennmarken (51) verschieden ist von der Länge der Codemarken (18).

25. Positionsmeßvorrichtung nach Anspruch 24, dadurch gekennzeichnet, daß die Länge zumindest einiger der Kennmarken (51) kürzer ist als die Länge der Codemarken (18).

26. Positionsmeßvorrichtung nach einem der Ansprüche 22 bis 25, dadurch gekennzeichnet, daß das Kennmarkenmuster allein oder zusammen mit dem Codemarkenmuster (43) in der Hilfslesevorrichtung (24) und/oder in der Codelesevorrichtung (12) ein Hilfssignalmuster erzeugt, derart, daß das Hilfssignalmuster verschieden ist von einem Signalmuster, das lediglich Codemarken eines Blockes repräsentiert.

27. Positionsmeßvorrichtung nach Anspruch 26, dadurch gekennzeichnet, daß das Hilfssignalmuster auf der Länge einer Codemarke (18) eine alternierende Folge von Wertigkeiten aufweist.

28. Positionsmeßvorrichtung nach Anspruch 22, dadurch gekennzeichnet, daß die Kennmarken (51) binäre Marken sind.

29. Positionsmeßvorrichtung nach Anspruch 1, dadurch gekennzeichnet, daß die Codemarken (18) binäre Marken sind.

30. Positionsmeßvorrichtung nach Anspruch 27 und 28, dadurch gekennzeichnet, daß das Hilfssignalmuster eine 1-0-1 oder eine 0-1-0 Bitfolge etwa auf der Länge einer Codemarke aufweist.

31. Positionsmeßvorrichtung nach den Ansprüchen 29 und 30, dadurch gekennzeichnet, daß sich sich in

13

Richtung des Fahrweges unmittelbar an dem Rand des Blockes (17) eine 1-Codemarke (21″) befindet und daß vor dem Block (17) eine 0-1-0-1 Folge von Kennmarken (51) vorgesehen ist, derart, daß die erste 0-Kennmarke direkt an den Block (17) anschließt und daß etwa mittig über der auf dem Block nächstliegenden 0-Codemarke (21′) oder Folge von 0-Codemarken eine 1-Kennmarke (51c) angebracht ist, derart, daß der Mittenabstand zu der nächstliegenden 1-Kennmarke (51a) $\frac{2P + 1}{6}$ mal die Länge einer Codemarke ist, wobei P eine ganze Zahl größer 1 ist, und daß die Länge der Kennmarken etwa ein Drittel der Länge einer Codemarke entspricht.

32. Positionsmeßvorrichtung nach den Ansprüche 29 und 30, dadurch gekennzeichnet, daß sich unmittelbar an dem Rand des Blockes eine 0-Codemarke (21′) befindet und daß sich unmittelbar an den Rand eine 0-Kennmarke anschließt, daß sich unmittelbar an den beiden Seiten dieser 0-Kennmarke eine 1-Kennmarke befindet, wobei der Mittenabstand dieser beiden 1-Kennmarken $\frac{5}{6}$ mal die Länge einer Codemarke ist, daß sich auf dem Block eine weitere 1-Kennmarke befindet, die etwa mittig über einer 0-Kennmarke oder einer Folge von 0-Codemarken sitzt, wobei der Mittenabstand dieser 1-Kennmarke zur nächstliegenden 1-Kennmarke $\frac{2P + 1}{6}$ mal die Länge einer Codemarke und P eine ganze Zahl größer 1 ist, und daß die Länge der Kennmarken etwa ein Drittel der Länge einer Codemarke entspricht.

33. Positionsmeßvorrichtung nach Anspruch 1, dadurch gekennzeichnet, daß die Codelesevorrichtung (12) einen Satz von Sensoren (41) aufweist, daß für jede Codemarke (18) n Sensoren (41) vorgesehen sind, wobei n eine ganze Zahl größer 0 ist, und daß die Sensoren (41) mit einem Mittenabstand von $\frac{1}{n}$ mal der Codemarkenlänge äquidistant an der Codelesevorrichtung (12) verteilt längs dem Codeträger (11) angeordnet sind.

34. Positionsmeßvorrichtung nach Anspruch 33, dadurch gekennzeichnet, daß die Hilfslesevorrichtung (24) durch Sensoren (41) der Codelesevorrichtung (12) gebildet ist.

35. Positionsmeßvorrichtung nach einem der Ansprüche 3 oder 4, dadurch gekennzeichnet, daß bei an dem Fahrzeug (4 ) angebrachtem Codeträger (11) der auf dem Codeträger (11) vorhandene mindestens eine Block (17) für das jeweilige Fahrzeug kennzeichnend ist.

## Claims

1. A position measuring device for vehicles running along fixed paths, more particularly the paths of cranes or trolley conveyors, which have at least one running rail along which a vehicle runs, having: at least one code carrier (11) which is disposed in the direction of the path of travel and which bears along its longitudinal extension in only one track code marks (18) formed in accordance with a pseudo-random sequence with a given law of formation, n successive code marks (18) each forming a code word (35) and each code word (35) occurring only once along the path of travel; at least one code reading device (12), the code carrier (11) and the code reading device (12) being movable in relation to one another in the direction of the path of travel; and an evaluating device (14) connected to the code reading device (12) for the evaluation of the code marks (18) read by the code reading device (12), characterized in that at least some of the code marks (18) directly succeeding one another in accordance with the law of formation of the pseudo-random sequence form a block (17) with which a block identification area (22) is associated, and an ancillary reading device (24) is so provided for the block identification area (22) that the evaluation device (14) can decide whether the code reading device (12) is so situated in the zone of a block (17) that the signals delivered by the code reading device (12) represent valid code words (35) of the block (17).

2. A position device according to claim 1, characterized in that the code carrier (11) is fixed and the code reading device (12) is disposed on the vehicle (4).

3. A position measuring device according to claim 1, characterized in that the code reading device (12) is fixed and the code carrier (11) is disposed on the vehicle (4).

4. A position measuring device according to claim 1, characterized in that at least one code carrier (11) and at least one code reading device (12) are fixed and at least one code carrier (11) and at least one code reading device (12) are disposed on the vehicle (4).

5. A position measuring device according to claim 1, characterized in that a number of blocks (17a, 17b) are disposed one behind the other in the direction of the path of travel and the blocks (17a, 17b) are spatially separated from one another along the path of travel by gaps (19).

6. A position measuring device according to claim 5, characterized in that the gaps contain at least in component zones a succession of identical or periodically disposed code marks (18).

7. A position measuring device according to claim 5, characterized in that the gaps (19) contain no code marks (18) or no code mark combinations which can occur in the blocks.

8. A position measuring device according to claim 1, characterized in that the last code work of a block (37a) lies in front of the first code word of the directly succeeding block (37c) in accordance with the law of formation of the pseudo-random sequence.

9. A position measuring device according to claim 1, characterized in that the last code word of a block (37a) lies immediately in front of the first code word of the directly succeeding block (37b) in accordance with the law formation of the pseudo-random sequence.

10. A position measuring device according to claim 1, characterized in that the block identification area (22) lies in a parallel track.

11. A position measuring device according to claim 10, characterized in that the parallel track has identification marks (27, 28) having at least two significances, and the signals of the code reading device (12) represent solely code marks from a block if the signals of the ancillary reading device (24) represent a particular identification mark significance or identification mark sequence.

12. A position measuring device according to claim 11, characterized in that the ancillary reading device (24) comprises at least one optical sensor.

13. A position measuring device according to claim 12, characterized in that the optical sensor is a photoelectric barrier.

14. A position measuring device according to claim 1, characterized in that the block identification area (22) lies in the track of the block.

15. A position measuring device according to claim 14, characterized in that the block identification area comprises a portion (23a) which precedes the block and another portion (22b) which terminates the block.

16. A position measuring device according to claim 14, characterized in that the sensors in the ancillary reading device (24) operate by a different physical principal from the sensors (41) in the code reading device (12) and the block identification area (22) extends over the entire block.

17. A position measuring device according to claim 14, characterized in that the sensors (41) in the ancillary reading device (24) operate by the same physical principal as the sensors (41) in the code reading device (12).

18. A device measuring according to claim 15, characterized in that the block identification area (22) at least partially covers the code marks at the edge of the associated block (17) or lies outside the block (17).

19. A position measuring device according to claims 14 or 18, characterized in that the block identification area (22) comprises a means (11) which cause a signal level displacement in the code and/or ancillary reading device (12, 24) outside the particular block.

20. A position measuring device according to claim 19, characterized in that the means (22) comprise a reducer (42) adapted to the nature of the sensor (41) in the ancillary reading device (24).

21. A position measuring device according to claim 20, characterized in that the reducer (42) is a grid.

22. A position measuring device according to claim 14, characterized in that the block identification area (22) comprises a sequence of identification marks (51), and there is a difference between the identification mark pattern and the code mark pattern.

23. A position measuring device according to claim 22, characterized in that the identification marks (51) are disposed on at least one identification mark carrier, and the or each identification mark carrier is disposed on the code carrier (11) at least partially covering the code marks (18) or alongside the block in the direction of the path or travel.

24. A position measuring device according to claim 22, characterized in that the difference is that, measured in the direction of the path of travel, the length of the identification marks (51) is different from the length of the code marks (18).

25. A position measuring device according to claim 24, characterized in that the length of at least some of the identification marks (51) is shorter than the length of the code marks (18).

26. A position measuring device according to one of claims 22 to 25, characterized in that the identification mark pattern on its own or in conjunction with the code mark pattern (43) so generates an ancillary signal pattern in the ancillary reading device (24) and/or in the code reading device (12) that the ancillary signal pattern is different from a signal pattern which represents solely code marks of the block.

27. A position measuring device according to claim 26, characterized in that the ancillary signal pattern has an alternating sequence of significances over the length of a code mark (18).

28. A position measuring device according to claim 22, characterized in that the identification marks (51) are binary marks.

29. A position measuring device according to claim 1, characterized in that the code marks (18) are binary marks.

30. A position measuring device according to claims 27 and 28, characterized in that the ancillary signal pattern has an 1-0-1 or an 0-1-0 bit sequence substantially over the length of one code mark.

31. A position measuring device according to claims 29 and 30, characterized in that a 1-code mark (21″) is disposed directly at the edge of the block (17) in the direction of the path of travel; an 0-1-0-1 sequence of identification marks (51) is so provided preceding the block (17) that the first 0-identification mark directly adjoins the block (17); a 1-identification mark (51c) is so disposed, substantially centrally above the next 0-code mark (21′) or sequence of 0-code marks situated next on the block, that the mean centre-to-centre distance from the nearest 1-identification mark (51a) is $\frac{2P + 1}{6}$ times the length of a code mark, where P is an integer greater than 1; and the length of the identification marks substantially corresponds to one third of the length of one code mark.

32. A position measuring device according to claims 29 and 30, characterized in that a 0-code mark (21′) is disposed directly at the edge of the block; the edge is directly adjoined by an 0-identification mark; a 1-identification mark is disposed directly on both sides of said 0-identification mark, the centre-to-centre distance of the two 1-identification marks being $\frac{5}{6}$ times the length of one code mark; disposed on the block is a further 1-identification mark which is situated substantially centrally over an 0-identification mark or a sequence of 0-code marks, the centre-to-centre distance between said 1-identification mark and the next 1-identification mark being $\frac{2P + 1}{6}$ times, the length of one code mark and P being an integer greater than 1; and the length of the identification marks corresponds substantially to one third of the length of one code mark.

33. A position measuring device according to claim 1, characterized in that the code reading device (12) has a set of sensors (41); $\underline{n}$ sensors (41) are provided for each code mark (18), $\underline{n}$ being an integer greater than 0; and the sensors (41) are disposed with a centre-to-centre distance of $\frac{1}{n}$ times the code mark length, distributed equidistantly on the code reading device (12) along the code carrier (11).

34. A position measuring device according to claim 33, characterized in that the ancillary reading device (24) is formed by sensors (41) of the code reading device (12).

35. A position measuring device according to one of claims 3 or 4, characterized in that when the code carrier (11) is disposed on the vehicle (4), the at least single block (17) present on the code carrier (11) is characteristic of the particular vehicle.

## Revendications

1. Dispositif de mesure de position pour des véhicules se déplaçant le long de voies fixes, de préférence de voies de grues ou de voies suspendues électriques, qui présentent au moins un rail de roulement le long duquel se déplace un véhicule, dispositif comportant au moins un support de code (11) qui est disposé dans la direction du parcours et porte des repères de code (18) agencés selon une suite pseudo-aléatoire avec une loi prédéterminée de manière à former une piste unique, n repères de code (18) successifs formant un mot code (35) et chaque mot code (35) n'apparaissant qu'une fois le long du parcours, au moins un dispositif de lecture de code (12), le support de code (11) et le dispositif de lecture de code (12) pouvant se déplacer l'un par rapport à l'autre dans la direction du parcours, ainsi qu'un dispositif d'exploitation (14) relié au dispositif de lecture de code (12) exploitant les repères de code (18) lus par le dispositif de lecture de code (12), caractérisé par le fait que quelques repères de code au mois parmi les repères de code (18) qui se suivent directement conformément à la loi de formation de la suite pseudo-aléatoire forment un bloc (17) auquel est associée une identité de bloc (22), et qu'il est prévu un dispositif de lecture auxiliaire (24) de l'identité de bloc (22) de manière telle que l'unité d'exploitation (14) puisse déterminer si le dispositif de lecture de code (12) se trouve dans la région d'un bloc (17) et que les signaux délivrés par le dispositif de lecture (12) représentent des mots codes (35) valides du bloc (17).

2. Dispositif de mesure de position selon la revendication 1, caractérisé par le fait que le support de code (11) est fixe et que le dispositif de lecture de code (12) est monté sur le véhicule (4).

3. Dispositif de mesure de position selon la revendication 1, caractérisé par le fait que le dispositif de lecture de code (12) est fixe et que le support de code (11) est monté sur le véhicule (4).

4. Dispositif de mesure de position selon la revendication 1, caractérisé par le fait qu'au moins un support de code (11) et au moins un dispositif de lecture de code (12) sont fixes et qu'au moins un support de code (11) et au moins un dispositif de lecture de code (12) sont montés sur le véhicule (4).

5. Dispositif de mesure de position selon la revendication 1, caractérisé par le fait que plusieurs blocs (17a,

EP 0 391 058 B1

17b) sont disposés l'un derrière l'autre dans la direction du parcours et que, le long du parcours, les blocs (17a, 17b) sont séparés dans l'espace par des discontinuités (19).

6. Dispositif de mesure de position selon la revendication 5, caractérisé par le fait que les discontinuités (19) comportent, dans des zones partielles au moins, une suite de repères de code (18) identiques ou disposés de manière périodique.

7. Dispositif de mesure de position selon la revendication 5, caractérisé par le fait que les discontinuités (19) ne comportent pas de repères de code (18) ou de combinaisons de repères de code apparaissant dans les blocs.

8. Dispositif de mesure de position selon la revendication 1, caractérisé par le fait que le dernier mot code d'un bloc (37a) est situé, conformément à la loi de formation de la suite pseudo-aléatoire, devant le premier mot code du bloc (37c) venant immédiatement derrière.

9. Dispositif de mesure de position selon la revendication 1, caractérisé par le fait que le dernier mot code d'un bloc (37a) est situé, conformément à la loi de formation de la suite pseudo-aléatoire, devant le premier mot code du bloc (37b) venant immédiatenent dernière.

10. Dispositif de mesure de position selon la revendication 1, caractérisé par le fait que l'identité de bloc (22) est située sur une piste parallèle.

11. Dispositif de mesure de position selon la revendication 10, caractérisé par le fait que la piste parallèle présente des repères d'identification (27, 28) avec au moins deux valeurs significatives et que les signaux du dispositif de lecture de code (12) ne représentent seulement les repères de code d'un bloc que dans la mesure où les signaux du dispositif de lecture auxiliaire (24) représentent une certaine valeur significative de repère d'identification ou de suite de repères d'identification.

12. Dispositif de mesure de position selon la revendication 11, caractérisé par le fait que le dispositif de lecture auxiliaire (24) comporte au moins un capteur optique.

13. Dispositif de mesure de position selon la revendication 12, caractérisé par le fait que le le capteur optique est un barrage photo-électrique.

14. Dispositif de mesure de position selon la revendication 1, caractérisé par le fait que l'identité de bloc (22) est située sur la piste du bloc.

15. Dispositif de mesure de position selon la revendication 14, caractérisé par le fait que l'identité de bloc (22) est constituée par une partie (22a) qui précède le bloc et par une autre partie (22b) qui termine le bloc.

16. Dispositif de mesure de position selon la revendication 14, caractérisé par le fait que les capteurs du dispositif de lecture auxiliaire (24) travaillent selon un principe physique différent des capteurs (41) du dispositif de lecture de code (12) et que l'identité de bloc (22) s'étend sur l'ensemble du bloc.

17. Dispositif de mesure de position selon la revendication 14, caractérisé par le fait que les capteurs (41) du dispositif de lecture auxiliaire (24) travaillent selon le même principe physique que les capteurs (41) du dispositif de lecture de code (12).

18. Dispositif de mesure de position selon la revendication 15, caractérisé par le fait que l'identité de bloc (22) recouvre au moins partiellement les repères de code sur le bord du bloc (17) concerné ou sont situés en dehors du bloc (17).

19. Dispositif de mesure de position selon la revendication 14 ou 18, caractérisé par le fait que l'identité de bloc (11) contient des moyens (22) qui, à l'intérieur ou à l'extérieur du bloc concerné, provoquent une modification du niveau de signal à l'intérieur du dispositif de lecture de code et/ou du dispositif de lecture auxiliaire (12, 24).

20. Dispositif de mesure de position selon la revendication 19, caractérisé par le fait que les moyens (22) comprennent un atténuateur (42) adapté au type de capteur (41) du dispositif de lecture auxiliaire (24).

21. Dispositif de mesure de position selon la revendication 20, caractérisé par le fait que l'atténuateur (42) est un réseau.

22. Dispositif de mesure de position selon la revendication 14, caractérisé par le fait que l'identité de bloc (22) comprend une suite de repères d'identification (51) et qu'il existe une différence entre le motif des repères d'identification et le motif des repères de code.

23. Dispositif de mesure de position selon la revendication 22, caractérisé par le fait que les repères d'identification (51 ) sont situés sur au moins un support de repères d'identification et que le ou les supports de repères d'identification sont appliqués sur le support de code (11) de manière à recouvrir au moins partiellement les repères de code (18) ou à côté du bloc dans la direction du parcours.

24. Dispositif de mesure de position selon la revendication 22, caractérisé par le fait que la différence réside en ce que la longueur des repères d'identification (51), mesurée dans la direction du parcours, est différente de la longueur des repères de code (18).

25. Dispositif de mesure de position selon la revendication 24, caractérisé par le fait que la longueur de certains repères d'identification (51) au moins est inférieure à la longueur des repères de code (18).

17

26. Dispositif de mesure de position selon l'une des revendications 22 à 25, caractérisé par le fait que le motif de repères d'identification seul ou en combinaison avec le motif de repères de code (43) produit un motif de signal auxiliaire dans le dispositif de lecture auxiliaire (24) et,/ou le dispositif de lecture de code (12) tel que le motif de signal auxiliaire soit différent du motif de signal représentant uniquement les repères de code d'un bloc.

27. Dispositif de mesure de position selon la revendication 26, caractérisé par le fait que le motif de signal auxiliaire présente une suite alternée de valeurs significatives sur la longueur d'un repère de code (18).

28. Dispositif de mesure de position selon la revendication 22, caractérisé par le fait que les repères d'identification (51) sont des repères binaires.

29. Dispositif de mesure de position selon la revendication 1, caractérisé par le fait que les repères de code (18) sont des repères binaires.

30. Dispositif de mesure de position selon les revendications 27 et 28, caractérisé par le fait que le motif de signal auxiliaire présente une suite de bits 1-0-1 ou 0-1-0 sensiblement sur la longueur d'un repère de code.

31. Dispositif de mesure de position selon les revendications 29 et 30, caractérisé par le fait qu'un repère de code 1 (21″) est situé immédiatement sur le bord du bloc (17), dans la direction du parcours, par le fait qu'il est prévu devant le bloc (17) une suite 0-1-0-1 de repères d'identification (51) telle que le premier repère d'identification 0 vienne immédiatement derrière le bloc (17), par le fait qu'un repère d'identification 1 (51c) est placé sensiblement au milieu, au-dessus du repère de code 0 ou de la suite de repères de code 0 venant immédiatement derrière sur le bloc de manière telle que la distance par rapport au repère d'identification 1 (51 a) le plus proche soit égale à (2P + 1) /6 fois la longueur d'un repère de code, P étant un nombre entier supérieur à 1 et par le fait que la longueur des repères d'identification correspond à environ un tiers de la longueur d'un repère de code.

32. Dispositif de mesure de position selon les revendications 29 et 30, caractérisé par le fait qu'un repère de code 0 (21′) est situé immédiatement sur le bord du bloc (17), par le fait qu'un repère d'identification 0 fait immédiatement suite au bord, par le fait qu'un repère d'identification 1 est situé de part et d'autre de ce repère d'identification 0, la distance entre ces deux repères d'identification 1 étant égale à 5/6 fois la longueur d'un repère de code, par le fait qu'un autre repère d'identification 1 est situé sur le bloc, lequel repère est placé sensiblement au milieu, au-dessus d'un repère de code 0 ou d'une suite de repères de code 0, la distance entre ce repère d'identification 1 et le repère d'identification 1 le plus proche étant égale à (2P + 1) /6 fois la longueur d'un repère de code, P étant un nombre entier supérieur à 1 et par le fait que la longueur des repères d'identification correspond à environ un tiers de la longueur d'un repère de code.

33. Dispositif de mesure de position selon la revendication 1, caractérisé par le fait que le dispositif de lecture de code (12) comporte un jeu de capteurs (41), par le fait qu'il est prévu pour claque repère de code (18) n capteurs (41), n étant un nombre entier supérieur à 0 et par le fait que les capteurs (41), dans le dispositif de lecture de code (12), sont équidistants et sont répartis le long du support de code (11), la distance entre entre eux étant égale à 1/n fois la longueur des repères de code.

34. Dispositif de mesure de position selon la revendication 33, caractérisé par le fait que le dispositif de lecture auxiliaire (24) est constitué par des capteurs (41 ) du dispositif de lecture de code (12).

35. Dispositif de mesure de position selon l'une des revendications 3 ou 4, caractérisé par le fait que, lorsque le support de code (11) est monté sur le véhicule (4), le bloc (17), au nombre d'au moins un, prévu sur le support de code (11) est caractéristique pour le véhicule concerné.

Fig. 1

Fig. 2

EP 0 391 058 B1

# Fig. 3

| Codewort-nummer | Q5 | Q4 | Q3 | Q2 | Q1 |
|---|---|---|---|---|---|
| 1 | 0 | 0 | 0 | 0 | 0 |
| 2 | 0 | 0 | 0 | 0 | 1 |
| 3 | 0 | 0 | 0 | 1 | 1 |
| 4 | 0 | 0 | 1 | 1 | 0 |
| 5 | 0 | 1 | 1 | 0 | 0 |
| 6 | 1 | 1 | 0 | 0 | 1 |
| 7 | 1 | 0 | 0 | 1 | 0 |
| 8 | 0 | 0 | 1 | 0 | 1 |
| 9 | 0 | 1 | 0 | 1 | 1 |
| 10 | 1 | 0 | 1 | 1 | 0 |
| 11 | 0 | 1 | 1 | 0 | 1 |
| 12 | 1 | 1 | 0 | 1 | 1 |
| 13 | 1 | 0 | 1 | 1 | 1 |
| 14 | 0 | 1 | 1 | 1 | 1 |
| 15 | 1 | 1 | 1 | 1 | 0 |
| 16 | 1 | 1 | 1 | 0 | 1 |
| 17 | 1 | 1 | 0 | 1 | 0 |
| 18 | 1 | 0 | 1 | 0 | 1 |
| 19 | 0 | 1 | 0 | 1 | 0 |
| 20 | 1 | 0 | 1 | 0 | 0 |
| 21 | 0 | 1 | 0 | 0 | 0 |
| 22 | 1 | 0 | 0 | 0 | 1 |
| 23 | 0 | 0 | 0 | 1 | 0 |
| 24 | 0 | 0 | 1 | 0 | 0 |
| 25 | 0 | 1 | 0 | 0 | 1 |
| 26 | 1 | 0 | 0 | 1 | 1 |
| 27 | 0 | 0 | 1 | 1 | 1 |
| 28 | 0 | 1 | 1 | 1 | 0 |
| 29 | 1 | 1 | 1 | 0 | 0 |
| 30 | 1 | 1 | 0 | 0 | 0 |
| 31 | 1 | 0 | 0 | 0 | 0 |

Fig. 4

Fig. 5

EP 0 391 058 B1

Fig. 6

Fig. 7

EP 0 391 058 B1

Fig. 8

Fig. 9

EP 0 391 058 B1

Fig. 10

EP 0 391 058 B1

Fig. 11

19

1 1 0 0 1 0 1 1 0 1 1 1

5/6 L

53

22

11

b    a    b

51 b

51 a

51 c

17

18

$$\frac{2P+1}{6}L$$

Fig. 12

30

EP 0 391 058 B1

Fig. 13

EP 0 391 058 B1